# EUROPÄISCHE PATENTANMELDUNG

(11) **EP 4 047 031 A1**
(43) Veröffentlichungstag der Anmeldung: **24.08.2022**
(21) Anmeldenummer: 21157588.1
(22) Anmeldetag: 17.02.2021
(51) Int. Cl.: C08G 59/02, C08G 65/26

(54) **AMINOFUNKTIONELLE POLYBUTADIENE MIT KAMMSTÄNDIGEN POLYETHERRESTEN UND VERFAHREN ZU DEREN HERSTELLUNG**

(71) Anmelder: Evonik Operations GmbH, 45128 Essen (DE)
(72) Erfinder: SCHUBERT, Frank, 47506 Neukirchen-Vluyn (DE); OTTO, Sarah, 45138 Essen (DE); WOJTASIK, Dirk, 44579 Castrop-Rauxel (DE); HENNING, Frauke, 45259 Essen (DE)
(74) Vertreter: Evonik Patent Association

(57) **Zusammenfassung**

Gegenstand der Erfindung ist ein Verfahren zur Herstellung von polyethermodifizierten aminofunktionellen Polybutadienen sowie gemäß diesem Verfahren herstellbare polyethermodifizierte aminofunktionelle Polybutadiene, wobei das Verfahren folgende Schritte umfasst:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer aminofunktionellen Verbindung (D) zu mindestens einem hydroxy- und aminofunktionellen Polybutadien (E);
c) Umsetzung des mindestens einen hydroxy- und aminofunktionellen Polybutadiens (E) mit mindestens einer epoxyfunktionellen Verbindung (F) zu mindestens einem polyethermodifizierten aminofunktionellen Polybutadien (G).

## Beschreibung

Die Erfindung betrifft ein Verfahren zur Herstellung von polyethermodifizierten aminofunktionellen Polybutadienen sowie gemäß diesem Verfahren herstellbare polyethermodifizierte aminofunktionelle Polybutadiene.

Polybutadiene mit seitständigen Polyetherresten sind bekannt und werden nach dem Stand der Technik beispielsweise durch eine Umsetzung von reaktiven, funktionalisierten Polybutadienen mit Polyethern hergestellt. So beschreiben Q. Gao et. al. in Macromolecular Chemistry and Physics (2013), 214(15), 1677-1687 amphiphile Polymer-Kammstrukturen, die durch Graften (Pfropfen) von Polyethylenglycol an eine Polybutadien-Hauptkette hergestellt werden. Gemäß JP 2011038003 werden mit Maleinsäureanhydrid-Einheiten funktionalisierte Polybutadiene mit Amino-terminierten Polyethern umgesetzt. Es entstehen maleinisierte Polybutadiene mit kammständigen Polyetherresten, welche über eine Amid- oder ImidGruppe angebunden sind. In einem ähnlichen Verfahren werden gemäß J. Wang, Journal of Applied Polymer Science (2013), 128(4), 2408-2413 Polyethylenglycole unter Ausbildung einer Ester-Verknüpfung an Polybutadiene mit hohem Anteil an 1,2-Butadien-Monomereinheiten addiert. Hochmolekulare Graftpolymere mit Kammstruktur werden nach dem in JP 2002105209 offenbarten Verfahren durch eine Addition von epoxidierten Polybutadienen mit OH-funktionellen Polyethern erhalten. H. Decher et. al. nutzen gemäß Polymer International (1995), 38(3), 219-225 die Addition von Isocyanat-terminierten Polyethylenglycolen an hydroxyfunktionelle Polybutadiene.

Weiterhin sind Verfahren zur Herstellung von polyethermodifizierten Polybutadienen bekannt, bei denen hydroxyfunktionelle Polybutadiene mit Epoxidverbindungen umgesetzt werden. So ist aus dem Stand der Technik beispielsweise die Alkoxylierung von OH-terminierten Polybutadienen bekannt.

US 4994621 A beschreibt beispielsweise die Alkoxylierung von hydroxyterminierten Polybutadienen mit Ethylenoxid und Propylenoxid in Gegenwart von Tetramethylammoniumhydroxid. Die Verwendung hydroxyterminierter Polybutadiene in der Alkoxylierung führt ausschließlich zu Polyether-Polybutadien-Polyether-Triblockstrukturen. Dieser Blockaufbau ist laut EP 2003156 A1 verantwortlich für die schlechte Mischbarkeit mit anderen Reaktionskomponenten bei der Herstellung von Polyurethanen.

Neben der Alkoxylierung von hydroxyterminierten Polybutadienen ist auch die Alkoxylierung von seitständig hydroxyfunktionellen Polybutadienen bekannt. So beschreiben Q. Gao et. al. in Macromolecular Chemistry and Physics (2013), 214(15), 1677-1687 die Herstellung eines seitständig polyethermodifizierten Polybutadiens durch Alkoxylierung eines seitständig hydroxyfunktionellen Polybutadiens mit Ethylenoxid. Die Herstellung des dabei eingesetzten seitständig hydroxyfunktionellen Polybutadiens erfolgt zunächst durch Epoxidierung eines Polybutadiens, anschließender Umsetzung des epoxidierten Polybutadiens mit einer Lithium-Polybutadien-Verbindung und schließlich Protonierung des Reaktionsprodukts mit HCIsaurem Methanol. Dieses Verfahren führt zu einem Polybutadien mit sowohl seitständigen Polyetherresten als auch seitständigen Polybutadienresten. Gemäß dem in der noch nicht veröffentlichten Schrift PCT/EP2020/083013 offenbarten Verfahren werden kammständig mit Polyetherresten modifizierte Polybutadiene durch eine Alkoxylierung seitständig hydroxyfunktioneller Polybutadiene hergestellt, welche zuvor durch eine Ringöffnung epoxyfunktioneller Polybutadiene mit vorzugsweise Alkoholen gewonnen wurden.

Die chemische Modifizierung von Polybutadienen mit Hilfe der Epoxidierung und anschließender Epoxidringöffnung durch Reaktion mit Aminen ist bekannt. JP 63288295 offenbart die Umsetzung von epoxyfunktionellen Polybutadienen mit Dimethylamin sowie die anschließende Protonierung der Aminfunktionen mit Essigsäure. Das Verfahren gemäß JP 57205596 umfasst neben der Epoxidringöffnung mit Dimethylamin die weitere Quaternisierung der Aminfunktionen mit Epichlorhydrin. Ein Verfahren zur Epoxidringöffnung hydrierter Polybutadiene mit Aminen ist in DE 2554093 offenbart. DE 2943879, DE 2732736 und JP 49055733 beschreiben die Addition von Diethanolamin. JP 48051989 beschreibt ebenfalls die Addition von Diethanolamin, gefolgt von einer Vernetzungsreaktion in Gegenwart von Dibenzoylperoxid. JP 53117030, DE 2734413 und DE 2943879 beschreiben die Addition von Ethanolamin, JP 05117556 die Umsetzung mit Diisopropanolamin, EP 0351135, EP 0274389 sowie DE 3305964 die Umsetzung der Epoxidgruppen mit Dimethylamin. DD 296286 offenbart die Addition von primären und sekundären Aminen mit 4 bis 20 C-Atomen an epoxidierte Polybutadiene in polaren Lösemitteln. Eine weitere Alkoxylierung der aminofunktionellen Polybutadiene wird in keiner dieser Schriften offenbart.

Aus dem Stand der Technik ist daher bislang kein Verfahren zur Herstellung von vorzugsweise linearen aminofunktionellen Polybutadienen mit seitständigen Polyetherketten durch eine einfache, direkte Alkoxylierungsreaktion von seitständig aminofunktionellen Polybutadienen mit Alkylenoxiden bekannt, wobei die seitständig aminofunktionellen Polybutadiene aus epoxyfunktionellen Polybutadienen durch eine Ringöffnungsreaktion mit Aminen hergestellt werden.

Polybutadiene und modifizierte Polybutadiene werden vielfach als Reaktivkomponente oder Formulierungsbestandteil eingesetzt, um z.B. Polymere hydrophob auszustatten oder zu flexibilisieren und die mechanischen Eigenschaften zu verbessern. Den Einsatzmöglichkeiten polyethermodifizierter Polybutadiene sind derzeit jedoch durch die Beschränkung auf wenige verfügbare Triblockstrukturen häufig Grenzen gesetzt. Es fehlt bisher die Möglichkeit, den chemischen Aufbau der polyethermodifizierten Polybutadiene in weiten Grenzen zu variieren. Zudem gibt es kein einfaches Herstellverfahren für solche Polymere.

Die Aufgabe der vorliegenden Erfindung war es, zumindest einen Nachteil des Standes der Technik zu überwinden.

Es bestand insbesondere die Aufgabe, ein verbessertes Verfahren zur Herstellung von vorzugsweise linearen Polybutadienen, die kammständig (seitständig, seitenständig) über eine Aminogruppe mit Polyetherresten modifiziert sind, bereitzustellen. Das Verfahren sollte weiterhin einen prozesstechnisch sehr einfachen Zugang zu vorzugsweise linearen Polybutadienen mit seitständigen Polyetherresten ermöglichen. Die polyethermodifizierten Polybutadiene sollten dabei ferner durch eine direkte Alkoxylierung von seitständig aminofunktionellen Polybutadienen erhältlich sein. Dabei bestand zudem die Aufgabe, im Verfahren geeignete seitständig aminofunktionelle Polybutadiene als Vorprodukte und Kettenstarter für die Alkoxylierung bereitzustellen.

Überraschenderweise wurde nun gefunden, dass ein Verfahren zu Herstellung von polyethermodifizierten aminofunktionellen Polybutadienen diese Aufgabe löst, welches die folgenden Schritte umfasst:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer aminofunktionellen Verbindung (D) zu mindestens einem hydroxy- und aminofunktionellen Polybutadien (E);
c) Umsetzung des mindestens einen hydroxy- und aminofunktionellen Polybutadiens (E) mit mindestens einer epoxyfunktionellen Verbindung (F) zu mindestens einem polyethermodifizierten aminofunktionellen Polybutadien (G).

Überraschenderweise wurde weiterhin gefunden, dass sich insbesondere Polybutadiene mit hohem Anteil an 1,4-Einheiten und geringem Gehalt an vinylischen 1,2- Einheiten nach der Epoxidierung mit Wasserstoffperoxid unter Ringöffnung mit primären oder sekundären Aminen in seitständig hydroxy- und aminofunktionelle Polybutadiene umwandeln und anschließend mit Alkylenoxiden alkoxylieren lassen.

Gelöst wird die Aufgabe der vorliegenden Erfindung daher durch die Gegenstände der unabhängigen Ansprüche. Vorteilhafte Ausgestaltungen der Erfindung sind in den nachgeordneten Ansprüchen, den Beispielen und der Beschreibung angegeben.

Die erfindungsgemäßen Gegenstände werden nachfolgend beispielhaft beschrieben, ohne dass die Erfindung auf diese beispielhaften Ausführungsformern beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei einem Druck von 101325 Pa (Normaldruck).

Die zahlenmittlere Molmasse Mₙ, die gewichtsmittlere Molmasse M_{w} und die Polydispersität (M_{w}/Mₙ) werden im Rahmen der vorliegenden Erfindung vorzugsweise mittels Gel-Permeations-Chromatographie (GPC) bestimmt, wie in den Beispielen beschrieben, sofern nicht explizit anders angegeben.

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern nicht anders angegeben. Bereichsangaben schließen die Bereichsgrenzen X und Y also mit ein, sofern nicht anders angegeben.

Die Begriffe seitständig, seitenständig und kammständig werden synonym verwendet.

Wo immer Moleküle bzw. Molekülfragmente ein oder mehrere Stereozentren aufweisen oder aufgrund von Symmetrien in Isomere unterschieden werden können oder aufgrund anderer Effekte, wie zum Beispiel eingeschränkter Rotation, in Isomere unterschieden werden können, sind alle möglichen Isomere von der vorliegenden Erfindung miteingeschlossen.

Die nachfolgenden Formeln (1) bis (5) beschreiben Verbindungen oder Reste, die aus Wiederholungseinheiten aufgebaut sind, wie beispielsweise sich wiederholende Fragmente, Blöcke oder Monomereinheiten, und eine Molgewichtsverteilung aufweisen können. Die Häufigkeit der Wiederholungseinheiten wird durch Indizes angegeben. Die in den Formeln verwendeten Indizes sind als statistische Mittelwerte (Zahlenmittel) zu betrachten, sofern nicht explizit anders angegeben. Die verwendeten Indexzahlen sowie die Wertebereiche der angegebenen Indizes werden als Mittelwerte der möglichen statistischen Verteilung der tatsächlichen vorhandenen Strukturen und/oder deren Mischungen verstanden, sofern nicht explizit anders angegeben. Die verschiedenen Fragmente bzw. Wiederholungseinheiten der in den nachfolgenden Formeln (1) bis (5) beschriebenen Verbindungen können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können. In den nachfolgenden Formeln sind alle Permutationen von Wiederholungseinheiten mitumfasst. Werden also im Rahmen der vorliegenden Erfindung Verbindungen, wie z.B. Polybutadiene (A), epoxyfunktionelle Polybutadiene (C), hydroxy- und aminofunktionelle Polybutadiene (E), polyethermodifizierte aminofunktionelle Polybutadiene (G) oder endverkappte Polyetherreste enthaltende polyethermodifizierte aminofunktionelle Polybutadiene (K) beschrieben, die verschiedene Einheiten mehrfach aufweisen können, so können diese sowohl ungeordnet, z.B. statistisch verteilt, oder geordnet in diesen Verbindungen vorkommen. Die Angaben zur Anzahl bzw. relativen Häufigkeit von Einheiten in solchen Verbindungen sind als Mittelwert (Zahlenmittel), gemittelt über alle entsprechenden Verbindungen, zu verstehen. Spezielle Ausführungen können dazu führen, dass die statistischen Verteilungen durch die Ausführungsform Beschränkungen erfahren. Für alle Bereiche, die nicht von der Beschränkung betroffen sind, ändert sich die statistische Verteilung nicht.

Ein erster Gegenstand der Erfindung ist somit ein Verfahren zur Herstellung von einem oder mehreren polyethermodifizierten aminofunktionellen Polybutadienen, umfassend die Schritte:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer aminofunktionellen Verbindung (D) zu mindestens einem hydroxy- und aminofunktionellen Polybutadien (E);
c) Umsetzung des mindestens einen hydroxy- und aminofunktionellen Polybutadiens (E) mit mindestens einer epoxyfunktionellen Verbindung (F) zu mindestens einem polyethermodifizierten aminofunktionellen Polybutadien (G).

Es ist bevorzugt, dass das erfindungsgemäße Verfahren außerdem mindestens einen der folgenden Schritte umfasst:
d) Umsetzung des mindestens einen polyethermodifizierten aminofunktionellen Polybutadiens (G) mit mindestens einem Endverkappungsreagenz (H) zu mindestens einem polyethermodifizierten aminofunktionellen Polybutadien (K) enthaltend endverkappte Polyetherreste;
e) Farbaufhellung des mindestens einen polyethermodifizierten aminofunktionellen Polybutadiens (G) bzw. (K);
f) Umsetzung zumindest eines Teils der Aminogruppen des mindestens einen polyethermodifizierten aminofunktionellen Polybutadiens (G) bzw. (K) zu quartären Ammoniumgruppen mittels einer Säure und/oder einem Quaternisierungsreagenz.

Die Schritte a), b), c), d), e) und f) erfolgen in der angegebenen Reihenfolge, wobei einer oder mehrere der Schritte d), e) und f) ausgelassen werden können. Die Schritte können unmittelbar aufeinander folgen. Das Verfahren kann aber auch weitere vorgelagerte Schritte, Zwischenschritte, oder nachgelagerte Schritte, wie zum Beispiel eine Aufreinigung der Edukte, der Zwischenprodukte und/oder der Endprodukte, aufweisen.

Die aus den epoxyfunktionellen Polybutadienen (C) durch Epoxidringöffnung mit Aminen hergestellten Polybutadiene (E) sind dadurch gekennzeichnet, dass sie seitständig sowohl Aminogruppen als auch Hydroxygruppen aufweisen. Je nach Reaktionsbedingungen im Schritt c) geschieht die Addition der epoxyfunktionellen Verbindungen (F) an den Aminogruppen, an den Hydroxygruppen oder vorzugsweise an beiden reaktiven Gruppen.

Es ist dabei bevorzugt, während des erfindungsgemäßen Verfahrens zur Stabilisierung der Edukte, Intermediate und Produkte, Stabilisatoren bzw. Antioxidantien zu verwenden, um ungewollte Polymerisationsreaktionen der Doppelbindungen zu vermeiden. Hierfür eignen sich z.B. die dem Fachmann bekannten sterisch gehinderten Phenole, kommerziell erhältlich zum Beispiel als Anox^{®} 20, Irganox^{®} 1010 (BASF), Irganox^{®} 1076 (BASF) und Irganox^{®} 1135 (BASF).

Es ist ferner bevorzugt, einen oder mehrere oder alle Verfahrensschritte unter einer Inertatmosphäre, z.B. unter Stickstoff, durchzuführen. Auch sollten vorzugsweise die unmodifizierten Edukte, also das mindestens eine Polybutadien (A), wie auch die erfindungsgemäßen polyethermodifizierten Fertigprodukte, also das mindestens eine polyethermodifizierte Polybutadien (G) bzw. (K), möglichst unter Ausschluss von Luft aufbewahrt werden.

Durch das erfindungsgemäße Verfahren wird es erstmalig ermöglicht, lineare Polybutadiene durch eine einfache direkte Alkoxylierung an den seitständigen Amino- und Hydroxygruppen mit kammständigen Polyetherresten zu modifizieren. Die Kettenlänge und Monomerabfolge im Polyetherrest kann in weiten Bereichen variiert werden. Die mittlere Anzahl der ans Polybutadien gebundenen Polyetherreste ist gezielt über den Grad der Epoxidierung und die Funktionalisierung mit Amino- und Hydroxygruppen einstellbar und eröffnet eine große strukturelle Vielfalt bei den hydroxy- und aminofunktionellen Polybutadienen (E).

Die erfindungsgemäß erhältlichen aminofunktionellen Polybutadiene mit kammständigen Polyetherresten sind vorzugsweise im Wesentlichen frei von restlichen Epoxidgruppen. Das erfindungsgemäße Verfahrensprodukt enthält vorzugsweise im Wesentlichen keine freien Polyetheranteile. Vorzugsweise sind im Wesentlichen die Polyether chemisch über ein Stickstoffatom und/oder über ein Sauerstoffatom an das Polybutadien angebunden.

### Schritt a)

Im Schritt a) des erfindungsgemäßen Verfahrens erfolgt die Umsetzung mindestens eines Polybutadiens (A) mit mindestens einem Epoxidierungsreagenz (B) zu mindestens einem epoxyfunktionellen Polybutadien (C).

Bei dieser Umsetzung werden Doppelbindungen des Polybutadiens (A) in Epoxidgruppen überführt. Verschiedene Methoden zur Epoxidierung von Polybutadienen mit z.B. Percarbonsäuren und Wasserstoffperoxid sind dem Fachmann bekannt und z.B. in CN 101538338, JP 2004346310, DD 253627 and WO 2016/142249 A1 offenbart. Besonders geeignet zur Herstellung der epoxyfunktionellen Polybutadiene (C) mit hohem Anteil an 1,4-Einheiten ist Perameisensäure, die auch *in situ* aus Ameisensäure in Gegenwart von Wasserstoffperoxid gebildet werden kann. Die Epoxidierung findet bevorzugt in einem Lösemittel wie Toluol oder Chloroform statt, das nach der Umsetzung und dem Auswaschen von evtl. Peroxidresten destillativ entfernt wird.

Die Polybutadiene (A) sind Polymere des Buta-1,3-diens. Die Polymerisation der Buta-1,3-dien-Monomere erfolgt dabei im Wesentlichen unter 1,4- und/oder 1,2-Verknüpfung. Eine 1,4-Verknüpfung führt zu sogenannten 1,4-*trans*-Einheiten und/oder 1,4-*cis*-Einheiten, die zusammengefasst auch als 1,4-Einheiten bezeichnet werden. Eine 1,2-Verknüpfung führt zu sogenannten 1,2-Einheiten. Die 1,2-Einheiten tragen eine Vinylgruppe und werden auch als vinylische 1,2-Einheiten bezeichnet. Die 1,2-Einheiten werden im Rahmen der vorliegenden Erfindung auch mit "(X)", die 1,4-*trans*-Einheiten mit "(Y)" und die 1,4-*cis-*Einheiten mit "(Z)" bezeichnet:

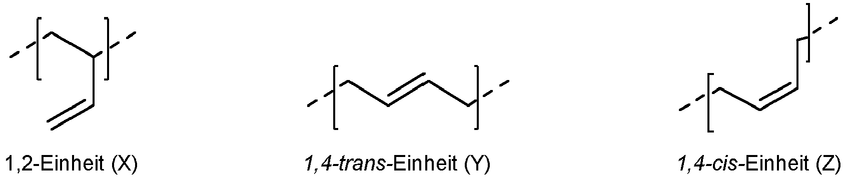

Die in den Einheiten enthaltenen Doppelbindungen werden analog als 1,4-*trans*-Doppelbindungen, 1,4-*cis-*Doppelbindungen bzw. 1,2-Doppelbindungen oder 1,2-Vinyl-Doppelbindungen bezeichnet. Die 1,4-*trans-*Doppelbindungen und 1,4-*cis*-Doppelbindungen werden zusammenfassend auch als 1,4-Doppelbindungen bezeichnet.

Es handelt sich bei den Polybutadienen (A) also um unmodifizierte Polybutadiene. Die Polybutadiene (A) und ihre Herstellverfahren sind dem Fachmann bekannt. Die Herstellung erfolgt vorzugsweise mittels einer radikalischen, einer anionischen oder einer koordinativen Kettenpolymerisation.

Die radikalische Kettenpolymerisation wird bevorzugt als Emulsionspolymerisation durchgeführt. Dies führt zu einem statistischen Auftreten der drei genannten Einheiten. Bei niedriger Reaktionstemperatur (ca. 5 °C) sinkt der Anteil an Vinylgruppen. Die Initiierung erfolgt vorzugsweise mit Kaliumperoxodisulfat und Eisensalzen oder auch mit Wasserstoffperoxid.

Bei der anionischen Kettenpolymerisation erfolgt die Initiierung der Kettenpolymerisation vorzugsweise mit Butyllithium. Das so erhaltene Polybutadien (A) enthält etwa 40 % 1,4-*cis*-Einheiten und 50 % 1,4-*trans-*Einheiten.

Bei der koordinativen Kettenpolymerisation werden vorzugsweise Ziegler-Natta-Katalysatoren eingesetzt, insbesondere stereospezifische Ziegler-Natta-Katalysatoren, die zu einem Polybutadien (A) mit einem hohen Anteil an 1,4-*cis*-Einheiten führen.

Bei der Polymerisation von 1,3-Butadien können durch Neben- oder Folgereaktionen, wie z.B. einer Folgereaktion der Doppelbindungen der resultierenden 1,2- und 1,4-Einheiten des Polybutadiens, auch verzweigte Polybutadiene (A) entstehen. Bevorzugt handelt es sich bei den erfindungsgemäß eingesetzten Polybutadienen (A) aber um lineare, also unverzweigte Polybutadiene. Es ist auch möglich, dass die Polybutadiene in geringen Anteilen andere Einheiten als 1,2-Einheiten, 1,4-*trans*-Einheiten oder 1,4-*cis-*Einheiten aufweisen. Es ist aber bevorzugt, dass der Massenanteil der Summe von 1,2-Einheiten, 1,4-*trans*-Einheiten und 1,4-*cis*-Einheiten mindestens 80 %, vorzugweise mindestens 90 %, insbesondere mindestens 99% bezogen auf die Gesamtmasse des mindestens einen Polybutadiens (A), also bezogen auf die Gesamtmasse aller eingesetzten Polybutadiene (A), beträgt.

Für das erfindungsgemäße Verfahren werden vorzugsweise solche Polybutadiene (A) verwendet, die 0 % bis 80 % 1,2-Einheiten und 20 % bis 100 % 1,4-Einheiten, bevorzugter 0 % bis 30 % 1,2-Einheiten und 70 % bis 100 % 1,4-Einheiten, noch bevorzugter 0 % bis 10 % 1,2-Einheiten und 90 % bis 100 % 1,4-Einheiten, und am bevorzugtesten 0 % bis 5 % 1,2-Einheiten und 95 % bis 100 % 1,4-Einheiten bezogen auf die Summe aus 1,2-Einheiten und 1,4-Einheiten aufweisen.

Es ist also bevorzugt, dass von den Doppelbindungen aller eingesetzten Polybutadiene (A) 0 % bis 80 % 1,2-Vinyl-Doppelbindungen und 20 % bis 100 % 1,4-Doppelbindungen, bevorzugter 0 % bis 30 % 1,2-Vinyl-Doppelbindungen und 70 % bis 100 % 1,4-Doppelbindungen, noch bevorzugter 0 % bis 10 % 1,2-Vinyl-Doppelbindungen und 90 % bis 100 % 1,4-Doppelbindungen, am bevorzugtesten 0 % bis 5 % 1,2-Vinyl-Doppelbindungen und 95 % bis 100 % 1,4-Doppelbindungen sind.

Für die erfindungsgemäße Herstellung der Produkte werden entsprechend vorzugsweise Polybutadiene (A) der Formel (1) 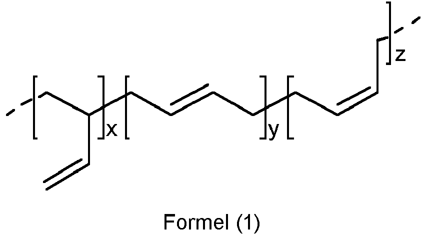 mit einem Gehalt von 0 % bis 80 % 1,2-Vinyl-Doppelbindungen (Index x) und 20 % bis 100 % 1,4-Doppelbindungen, bevorzugter 0 % bis 30 % 1,2-Vinyl-Doppelbindungen und 70 % bis 100 % 1,4-Doppelbindungen, noch bevorzugter mit 0 % bis 10 % 1,2-Vinyl-Doppelbindungen und 90 % bis 100 % 1,4-Doppelbindungen, am bevorzugtesten mit 0 % bis 5 % 1,2-Vinyl-Doppelbindungen und 95 % bis 100 % 1,4-Doppelbindungen verwendet. Das Verhältnis von 1,4-*trans*-Doppelbindungen (Index y) und 1,4-*cis-*Doppelbindungen (Index z) ist beliebig.

Die Indizes x, y und z geben dabei die Anzahl der jeweiligen Butadien-Einheit im Polybutadien (A) wieder. Es handelt sich dabei um numerische Mittelwerte (Zahlenmittel) über die Gesamtheit aller Polybutadienpolymere des mindestens einen Polybutadiens (A).

Die mittlere Molmasse und Polydispersität der verwendeten Polybutadiene (A) nach Formel (1) ist beliebig.

Es ist bevorzugt, dass die zahlenmittlere Molmasse Mₙ des mindestens einen Polybutadiens (A) von 200 g/mol bis 20000 g/mol, bevorzugter von 500 g/mol bis 10000 g/mol, am bevorzugtesten von 700 g/mol bis 5000 g/mol beträgt.

Alternativ ist es bevorzugt, dass die zahlenmittlere Molmasse Mₙ des mindestens einen Polybutadiens (A) von 2100 g/mol bis 20000 g/mol, bevorzugter von 2200 g/mol bis 10000 g/mol, am bevorzugtesten von 2300 g/mol bis 5000 g/mol beträgt.

Es ist weiterhin bevorzugt, dass das mindestens eine Polybutadien (A) im Zahlenmittel 5 bis 360, bevorzugter 10 bis 180, am bevorzugtesten 15 bis 90 Einheiten ausgewählt aus der Gruppe bestehend aus 1,2-Einheiten, 1,4-*cis*-Einheiten und 1,4-*trans*-Einheiten aufweist.

Alternativ ist es bevorzugt, dass das mindestens eine Polybutadien (A) im Zahlenmittel 35 bis 360, bevorzugter 40 bis 180, am bevorzugtesten 45 bis 90 Einheiten ausgewählt aus der Gruppe bestehend aus 1,2-Einheiten, 1,4-*cis*-Einheiten und 1,4-*trans*-Einheiten aufweist.

Es ist weiterhin bevorzugt, dass die Viskosität der verwendeten Polybutadiene (A) 50 bis 50000 mPas bevorzugter 100 bis 10000 mPas, am bevorzugtesten 500 bis 5000 mPas beträgt (bestimmt gemäß DIN EN ISO 3219:1994-10).

Am bevorzugtesten eingesetzte Polybutadiene sind die von Evonik Industries AG / Evonik Operations GmbH kommerziell erhältlichen Produkte Polyvest^{®} 110 und Polyvest^{®} 130 mit den folgenden typischen Kenndaten:
Polyvest^{®} 110: ca. 1 % 1,2-Vinyl-Doppelbindungen, ca. 24 % 1,4-*trans*-Doppelbindungen, ca. 75 % 1,4-*cis*-Doppelbindungen, zahlenmittlere Molmasse Mₙ ca. 2600 g/mol, Viskosität (20 °C) 700-860 mPas (gemäß DIN EN ISO 3219:1994-10),
Polyvest^{®} 130: ca. 1 % 1,2-Vinyl-Doppelbindungen, ca. 22 % 1,4-*trans*-Doppelbindungen, ca. 77 % 1,4-*cis*-Doppelbindungen, zahlenmittlere Molmasse Mₙ ca. 4600 g/mol, Viskosität (20 °C) 2700-3300 mPas (gemäß DIN EN ISO 3219:1994-10).

Am bevorzugtesten eingesetzte Polybutadiene sind weiterhin die von Synthomer PLC erhältlichen Produkte Lithene ultra AL und Lithene ActiV 50 mit den folgenden typischen Kenndaten:
Lithene ultra AL: ca. 40 % 1,2-Vinyl-Doppelbindungen, ca. 60 % 1,4- Doppelbindungen,
Lithene ActiV 50: ca. 70 % 1,2-Vinyl-Doppelbindungen, ca. 30% 1,4- Doppelbindungen.

Der Epoxidierungsgrad wird z.B. mit Hilfe der ¹³C-NMR-Spektroskopie oder der Epoxidzahl-Titration (Bestimmungen des Epoxid-Äquivalents gemäß DIN EN ISO 3001:1999) quantitativ bestimmt und kann über die Prozessbedingungen, insbesondere über die Einsatzmenge an Wasserstoffperoxid in Relation zur vorgelegten Menge an Doppelbindungen im Polybutadien, gezielt und reproduzierbar eingestellt werden.

Im Schritt a) des erfindungsgemäßen Verfahrens werden >0 % (also von >0 % bis 100 %) aller Doppelbindungen des mindestens einen Polybutadiens (A) epoxidiert.

Es ist bevorzugt, dass im Schritt a) des erfindungsgemäßen Verfahrens von >0 % bis <100 %, bevorzugter von >0 % bis 70 %, noch bevorzugter von 1 % bis 50 %, noch bevorzugter von 2 % bis 40 %, noch bevorzugter von 3 % bis 30 % und am bevorzugtesten von 4 % bis 20 % aller Doppelbindungen des mindestens einen Polybutadiens (A) epoxidiert werden.

Als Epoxidierungsreagenz (B) sind prinzipiell alle dem Fachmann bekannten Epoxidierungsmittel einsetzbar. Es ist bevorzugt, dass das Epoxidierungsreagenz (B) ausgewählt ist aus der Gruppe der Peroxycarbonsäuren (Percarbonsäuren, Persäuren), vorzugsweise aus der Gruppe bestehend aus *meta-*Chlorperbenzoesäure, Peroxyessigsäure (Peressigsäure) und Peroxyameisensäure (Perameisensäure), insbesondere Peroxyameisensäure (Perameisensäure). Die Peroxycarbonsäuren werden dabei vorzugsweise *in situ* aus der entsprechenden Carbonsäure und Wasserstoffperoxid gebildet.

Es ist am bevorzugtesten, dass das mindestens eine Epoxidierungsreagenz (B) Perameisensäure enthält, welche vorzugweise *in situ* aus Ameisensäure und Wasserstoffperoxid gebildet wird.

Die Epoxidierung des mindestens einen Polybutadiens (A) findet statistisch über die Polybutadienkette verteilt bevorzugt an den 1,4-Doppelbindungen statt. Eine Epoxidierung der 1,2-Doppelbindungen kann ebenfalls stattfinden und findet an diesen ebenfalls statistisch über die Polybutadienkette verteilt statt. Eine Epoxidierung der 1,2-Doppelbindungen ist aber gegenüber einer Epoxidierung der 1,4-Doppelbindungen benachteiligt. Das Reaktionsprodukt enthält somit epoxyfunktionelle Polybutadienpolymere, die sich in ihrem Epoxidierungsgrad voneinander unterscheiden. Alle angegebenen Epoxidierungsgrade sind daher als Mittelwerte zu verstehen.

### Schritt b)

Im Schritt b) des erfindungsgemäßen Verfahrens erfolgt die Umsetzung des mindestens einen epoxyfunktionellen Polybutadiens (C) mit mindestens einer aminofunktionellen Verbindung (D) zu mindestens einem hydroxy- und aminofunktionellen Polybutadien (E).

Bei dieser Umsetzung findet eine Addition (Additionsreaktion) der mindestens einen aminofunktionellen Verbindung (D) an das mindestens eine epoxyfunktionelle Polybutadien (C) statt. Die Umsetzung erfolgt also unter Bildung von einer oder mehreren kovalenten Bindungen zwischen der mindestens einen aminofunktionellen Verbindung (D) und dem mindestens einen epoxyfunktionellen Polybutadien (C). Die Umsetzung umfasst vorzugsweise (zumindest idealisiert) einen Reaktionsschritt, bei dem ein nukleophiler Angriff mindestens einer Aminogruppe der mindestens einen aminofunktionellen Verbindung (D) an mindestens eine Epoxygruppe des mindestens einen epoxyfunktionellen Polybutadiens (C) unter Ringöffnung dieser mindestens einen Epoxygruppe erfolgt.

Es ist bevorzugt, dass die mindestens eine aminofunktionelle Verbindung (D) ausgewählt ist aus Verbindungen mit mindestens einer primären und/oder mindestens einer sekundären Aminogruppe, da primäre und sekundäre Aminogruppen besonders einfach an die Epoxidgruppen des Polybutadiens addiert werden. Zu diesen aminofunktionellen Verbindungen (D) wird im Rahmen der vorliegenden Erfindung auch Ammoniak gezählt. Bevorzugter ist es aber, dass die mindestens eine aminofunktionelle Verbindung (D) ausgewählt ist aus organischen Verbindungen mit mindestens einer primären und/oder mindestens einer sekundären Aminogruppe. Es ist noch bevorzugter, dass die mindestens eine aminofunktionelle Verbindung (D) ausgewählt ist aus organischen Verbindungen mit 1 bis 22 Kohlenstoffatomen sowie mindestens einer primären und/oder mindestens einer sekundären Aminogruppe. Es ist noch bevorzugter, dass die mindestens eine aminofunktionelle Verbindung (D) ausgewählt ist aus organischen Verbindungen mit 1 bis 12 Kohlenstoffatomen sowie mindestens einer primären und/oder mindestens einer sekundären Aminogruppe. Es ist weiterhin bevorzugt, dass die aminofunktionelle Verbindung (D) genau eine primäre oder sekundäre Aminogruppe aufweist. Dadurch können unerwünschte Vernetzungsreaktionen reduziert oder verhindert werden. Es ist weiterhin bevorzugt, dass die aminofunktionelle Verbindung (D) kein aromatisches Amin, insbesondere kein primäres aromatisches Amin ist, da einige primäre aromatische Amine als Humankanzerogene bekannt sind. Unter einem aromatischen Amin werden im Rahmen der vorliegenden Erfindung solche Amine verstanden, bei denen das Stickstoffatom mindestens einer Aminogruppe an ein Kohlenstoffatom gebunden ist, das wiederum Teil eines aromatischen Ringsystems ist.

Es ist weiterhin bevorzugt, dass die mindestens eine aminofunktionelle Verbindung (D) aus der Gruppe bestehend aus Ammoniak, Alkylaminen, Cycloalkylaminen, Dialkylaminen, Monoalkanolaminen und Dialkanolaminen ausgewählt wird. Die am Stickstoff gebundenen aliphatischen Reste können auch aromatische Reste oder Heteroatome wie Stickstoff oder Sauerstoff tragen. Es ist daher weiterhin ebenfalls bevorzugt, dass die mindestens eine aminofunktionelle Verbindung (D) ausgewählt ist aus der Gruppe bestehend aus Diaminen, Polyaminen, Polyetheraminen und hydroxyfunktionellen aliphatischen Aminen. Bevorzugter wird die mindestens eine aminofunktionelle Verbindung (D) ausgewählt aus der Gruppe bestehend aus Alkylaminen, Cycloalkylaminen, Dialkylaminen, Monoalkanolaminen, Dialkanolaminen und Trialkanolaminen, jeweils mit 1 bis 22 Kohlenstoffatomen und mit genau einer primären oder sekundären Aminogruppe. Noch bevorzugter wird die mindestens eine aminofunktionelle Verbindung (D) ausgewählt aus der Gruppe bestehend aus Alkylaminen, Monoalkanolaminen, Dialkanolaminen und Trialkanolaminen, jeweils mit 1 bis 12 Kohlenstoffatomen und genau einer primären oder sekundären Aminogruppe. Am bevorzugtesten wird die mindestens eine aminofunktionelle Verbindung (D) ausgewählt aus der Gruppe bestehend aus Butylamin, Isobutylamin, Hexylamin, Octylamin, 2-Ethylhexylamin, Decylamin, Laurylamin, Ethanolamin, Isopropanolamin, Diethanolamin, Diisopropanolamin, N-Methylethanolamin, N-Methylisopropanolamin, 2-Amino-2-methyl-1-propanol, 2-Amino-2-ethyl-1,3-propandiol, Tris(hydroxymethyl)aminomethan (TRIS, 2-Amino-2-(hydroxymethyl)propan-1,3-diol), Morpholin, Piperidin, Cyclohexylamin, N,N-Dimethylaminopropylamin (DMAPA) und Benzylamin. Dabei können auch beliebige Gemische dieser Amine eingesetzt werden. Unter dem Begriff "Trialkanolamine" werden im Rahmen der vorliegenden Erfindung nur solche Trialkanolamine verstanden, die primäre und/oder sekundäre Aminogruppen tragen, wie beispielsweise Tris(hydroxymethyl)aminomethan.

Das molare Verhältnis der NH-Gruppen der mindestens einen aminofunktionellen Verbindung (D) zu den Epoxidgruppen des mindestens einen epoxyfunktionellen Polybutadiens (C) kann in einem weiten Bereich variiert werden. Es ist aber bevorzugt, die mindestens eine aminofunktionelle Verbindung (D) und das mindestens eine epoxyfunktionelle Polybutadien (C) in einem solchen molaren Verhältnis von NH-Gruppen zu Epoxidgruppen einzusetzen, dass ein möglichst quantitativer Umsatz aller Epoxidgruppen erreicht wird. Es ist daher bevorzugt, dass im Schritt b) die Gesamtzahl der NH-Gruppen aller aminofunktionellen Verbindungen (D) zur Gesamtzahl der Epoxidgruppen aller epoxyfunktionellen Polybutadiene (C) von 0,8:1 bis 20:1, bevorzugter von 0,9:1 bis 10:1, noch bevorzugter 1:1 bis 5:1, am bevorzugtesten von 1:1 bis 3:1 beträgt. Der Überschuss an Verbindung (D) kann nach der Umsetzung z.B. destillativ entfernt und bei Bedarf wiederverwendet werden. In diesem Zusammenhang sei darauf hingewiesen, dass ein Ammoniak-Molekül genau drei, eine primäre Aminogruppe genau zwei und eine sekundäre Aminogruppe genau eine NH-Gruppe aufweist.

Die Epoxidringöffnung mit Aminen kann ggf. in einem Lösemittel wie Ethanol, Propanol, Isopropanol oder THF stattfinden. Bevorzugt ist der Verzicht auf Lösemittel.

Vorzugsweise findet die Umsetzung in Anwesenheit mindestens eines Katalysators statt. Der Katalysator ist wahlweise im Reaktionsgemisch homogen löslich, kann als wässrige Lösung zugefügt werden oder ist heterogen als Feststoff darin verteilt.

Es ist bevorzugt, dass der Katalysator ausgewählt ist aus der Gruppe bestehend aus Lewis-Säuren und Brønsted-Säuren; bevorzugter aus der Gruppe bestehend aus Wasser, Phenolen, Alkoholen, Carbonsäuren, Ammoniumverbindungen, Phosphoniumverbindungen und Lithiumbromid; noch bevorzugter aus der Gruppe bestehend aus Carbonsäuren, Phenolen, Ammoniumverbindungen, Phosphoniumverbindungen und Lithiumbromid, noch bevorzugtester aus der Gruppe bestehend aus Carbonsäuren, Phenol und Lithiumbromid, am bevorzugtesten Lithiumbromid. Der Katalysator ist wahlweise im Reaktionsgemisch homogen löslich, kann als wässrige Lösung zugefügt werden oder ist heterogen als Feststoff darin verteilt.

Die Art und Einsatzmenge des Katalysators werden so gewählt, dass eine möglichst rasche und quantitative Addition der mindestens einen aminofunktionellen Verbindung (D) an die Epoxidgruppen des mindestens einen epoxyfunktionellen Polybutadiens (C) erfolgt. Vorzugsweise wird Lithiumbromid, als Feststoff oder in Wasser gelöst, in einem Massenanteil von 0,05 % bis 15,0 %, bevorzugt von 0,2 % bis 10,0 %, am bevorzugtesten von 0,5 % bis 7,0 % bezogen auf die Masse der mindestens einen aminofunktionellen Verbindung (D) eingesetzt.

Die Umsetzung des mindestens einen epoxyfunktionellen Polybutadiens (C) mit der mindestens einen aminofunktionellen Verbindung (D), ggf. in Gegenwart eines Katalysators, wird bevorzugt bei 50 °C bis 250 °C, bevorzugter bei 80 °C bis 200 °C durchgeführt.

Die Komponenten werden einige Stunden gerührt, bis die Epoxidgruppen möglichst vollständig umgesetzt sind. Die Analyse auf Epoxidgruppen kann wahlweise durch NMR-spektroskopische Analyse oder durch bekannte Methoden der Epoxidzahl-Titration erfolgen (wie in den Beispielen beschrieben).

Die Reaktionsbedingungen in Schritt b) werden vorzugsweise so gewählt, dass mehr als 90 % der in Schritt a) generierten Epoxidgruppen unter Ringöffnung umgesetzt werden. Es ist am bevorzugtesten, dass im Produkt von Schritt b), also im mindestens einen hydroxy- und aminofunktionellen Polybutadien (E), keine Epoxidgruppen mehr nachweisbar sind.

Nach der Reaktion werden die gegebenenfalls überschüssigen aminofunktionellen Verbindungen (D) sowie gegebenenfalls Lösemittel, Wasser und der Katalysator vorzugsweise destillativ entfernt und ausgefallene Salze bei Bedarf abfiltriert.

Aus jeweils einer Epoxidgruppe eines epoxyfunktionellen Polybutadiens (C) resultiert nach Ringöffnung durch eine aminofunktionelle Verbindung (D) der Formel A₁-NH-A₂ eine Wiederholungseinheit der Formel (2a), (2b) oder (2c):

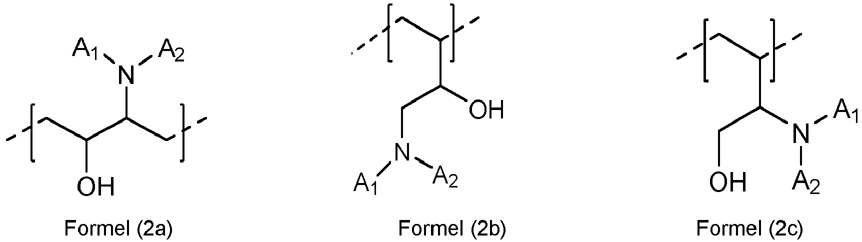

In den Formeln (2a), (2b) und (2c) sind die Reste A₁ und A₂ vorzugsweise jeweils unabhängig voneinander organische Reste, die weitere Amin- oder Hydroxylgruppen tragen können, oder Wasserstoffradikale. Die Reste A₁ und A₂ können somit Heteroatome wie Stickstoff und Sauerstoff enthalten und auch über einen organischen Rest miteinander verbrückt sein, wie z.B. bei Morpholin oder Piperidin. Die aminofunktionelle Verbindung (D) der Formel A₁-NH-A₂ kann auch Ammoniak sein. Im Falle von Ammoniak sind sowohl A₁ also auch A₂ Wasserstoffradikale. Wird beispielsweise Ethanolamin als aminofunktionelle Verbindung (D) eingesetzt, so ist in den Formeln (2a), (2b) und (2c) der Rest A₁ z.B. ein Hydroxyethylrest und der Rest A₂ dann ein Wasserstoffradikal, also A₂ = H. Es resultiert aus jeder umgesetzten Epoxidgruppe mindestens eine seitständige OH-Gruppe.

Wird ein primäres Amin als Verbindung (D) mit einer Epoxidgruppe eines epoxyfunktionellen Polybutadiens (C) umgesetzt, entsteht stets eine sekundäre Aminogruppe mit einem reaktiven Wasserstoff am Stickstoffatom. Diese sekundäre Aminogruppe kann sich über die NH-Gruppe in einer Folgereaktion an eine weitere Epoxidgruppe addieren und somit zwei epoxyfunktionelle Polybutadiene (C) miteinander verknüpfen. Die Reaktionsbedingungen im Schritt b) werden vorzugsweise so gewählt, dass diese Verknüpfungsreaktion weitgehend unterdrückt wird.

Im Falle der erfindungsgemäß bevorzugten Polybutadiene (A) mit einem überwiegenden Anteil von 1,4-Einheiten, überwiegen von den Wiederholungseinheiten der Formeln (2a), (2b) und (2c) solche der Formel (2a).

Es ist bevorzugt, dass das mindestens eine hydroxy- und aminofunktionelle Polybutadien (E) 20 % bis 100 %, bevorzugter 70 % bis 100 %, noch bevorzugter 90 % bis 100 %, am bevorzugtesten 95 % bis 100% Wiederholungseinheiten der Formel (2a) bezogen auf die Gesamtzahl aller Wiederholungseinheiten der Formeln (2a), (2b) und (2c) aufweist.

Der Anteil der Wiederholungseinheiten der Formeln (2a), (2b) und (2c) zusammengenommen beträgt >0 % (also von >0 % bis 100 %) bezogen auf die Gesamtzahl aller Wiederholungseinheiten des mindestens einen hydroxy- und aminofunktionellen Polybutadiens (E).

Der Aminierungsgrad beträgt entsprechend >0 % (also von >0 % bis 100 %).

Es ist bevorzugt, dass der Anteil der Wiederholungseinheiten der Formeln (2a), (2b) und (2c) zusammengenommen von >0 % bis <100 %, bevorzugter von >0 % bis 70 %, noch bevorzugter von 1 % bis 50 %, noch bevorzugter von 2 % bis 40 %, noch bevorzugter von 3% bis 30 % und am bevorzugtesten von 4 % bis 20 % bezogen auf die Gesamtzahl aller Wiederholungseinheiten des mindestens einen hydroxy- und aminofunktionellen Polybutadiens (E) beträgt.

Es ist entsprechend bevorzugt, dass der Aminierungsgrad von >0 % bis <100%, bevorzugter von >0 % bis 70 %, noch bevorzugter von 1 % bis 50 %, noch bevorzugter von 2 % bis 40 %, noch bevorzugter von 3 % bis 30 % und am bevorzugtesten von 4 % bis 20 % beträgt.

Bei vollständiger Umsetzung in Schritt b) entspricht der Aminierungsgrad des hydroxy- und aminofunktionellen Polybutadiens (E) dem Epoxidierungsgrad des entsprechenden epoxyfunktionellen Polybutadiens (C).

### Schritt c)

Im Schritt c) des erfindungsgemäßen Verfahrens erfolgt die Umsetzung des mindestens einen hydroxy- und aminofunktionellen Polybutadiens (E) mit mindestens einer epoxyfunktionellen Verbindung (F) zu mindestens einem polyethermodifizierten aminofunktionellen Polybutadien (G).

Das mindestens eine hydroxy- und aminofunktionelle Polybutadien (E) aus Schritt b) dient im Schritt c) als Startverbindung (Starter) für die Umsetzung mit der mindestens einen epoxyfunktionellen Verbindung (F). Unter Ringöffnung und vorzugsweise in Gegenwart eines geeigneten Katalysators wird die mindestens eine epoxyfunktionelle Verbindung (F) (im Folgenden auch einfach als "Monomer" oder "Epoxidmonomer" oder "Epoxid" bezeichnet), in einer Polyadditionsreaktion an die NH- und/oder OH-Gruppen des mindestens einen hydroxy- und aminofunktionellen Polybutadiens (E) addiert. Dies führt zur Bildung von aminofunktionellen Polybutadienen mit kammständigen (seitständigen) Polyetherketten, also zur Bildung des mindestens einen polyethermodifizierten aminofunktionellen Polybutadiens (G). Bevorzugt werden die Monomere an (zumindest im Wesentlichen) alle OH-Gruppen und an (zumindest im Wesentlichen) alle NH-Gruppen addiert. Vorzugsweise ist das polyethermodifizierte aminofunktionelle Polybutadien (G) ein lineares Polybutadien, das kammständig (seitständig) mit Polyetherresten modifiziert ist. Es ist also bevorzugt, dass das polyethermodifizierte aminofunktionelle Polybutadien (G) ein lineares Polybutadien-Rückgrat und seitständige Polyetherreste aufweist.

Bei der Umsetzung im Schritt c) handelt es sich vorzugsweise um eine Alkoxylierungsreaktion, also um eine Polyaddition von Alkylenoxiden an das mindestens eine hydroxy- und aminofunktionelle Polybutadien (E). Die Umsetzung im Schritt c) kann aber alternativ oder zusätzlich zu den Alkylenoxiden auch mit Glycidylverbindungen durchgeführt werden.

Es ist daher bevorzugt, dass die mindestens eine im Schritt c) eingesetzte epoxyfunktionelle Verbindung aus der Gruppe der Alkylenoxide, bevorzugter aus der Gruppe der Alkylenoxide mit 2 bis 18 Kohlenstoffatomen, noch bevorzugter aus der Gruppe der Alkylenoxide mit 2 bis 8 Kohlenstoffatomen, am bevorzugtesten aus der Gruppe bestehend aus Ethylenoxid, Propylenoxid, 1-Butylenoxid, *cis*-2-Butylenoxid, *trans*-2-Butylenoxid, Isobutylenoxid und Styroloxid ausgewählt ist; und/oder, dass die mindestens eine im Schritt c) eingesetzte epoxyfunktionelle Verbindung aus der Gruppe der Glycidylverbindungen, bevorzugter aus der Gruppe der monofunktionellen Glycidylverbindungen, am bevorzugtesten aus der Gruppe bestehend aus Phenylglycidylether, o-Kresylglycidylether, tert-Butylphenylglycidylether, Allylglycidylether, Butylglycidylether, 2-Ethylhexylglycidylether, C₁₂/C₁₄-Fettalkoholglycidylether und C₁₃/C₁₅-Fettalkoholglycidylether ausgewählt ist.

Die Monomere können wahlweise einzeln in reiner Form, abwechselnd hintereinander in beliebiger Dosierreihenfolge, aber auch gleichzeitig gemischt zugefügt werden. Die Sequenz der Monomereinheiten in der entstehenden Polyetherkette unterliegt damit einer blockweisen Verteilung oder einer statistischen Verteilung oder einer graduellen Verteilung im Endprodukt.

Durch das erfindungsgemäße Verfahren werden seitständige Polyetherketten am Polybutadien aufgebaut, die sich dadurch auszeichnen, dass sie hinsichtlich Strukturaufbau und Molmasse gezielt und reproduzierbar hergestellt werden können.

Die Abfolge der Monomereinheiten kann in weiten Grenzen durch die Reihenfolge der Zugabe variabel gestaltet werden.

Die Molmassen der seitständigen Polyetherreste können nach dem erfindungsgemäßen Verfahren in weiten Grenzen variiert und gezielt und reproduzierbar über das Molverhältnis der zugefügten Monomere in Bezug auf die NH- und OH-Gruppen des mindestens einen vorgelegten hydroxy- und aminofunktionellen Polybutadiens (E) aus Schritt b) gesteuert werden.

Die erfindungsgemäß hergestellten polyethermodifizierten aminofunktionellen Polybutadiene (G) sind vorzugsweise dadurch gekennzeichnet, dass sie gemäß den Formeln (3a), (3b) und (3c) über eine Amino-und/oder Ethergruppe an das Polybutadiengerüst gebundene Reste B enthalten,

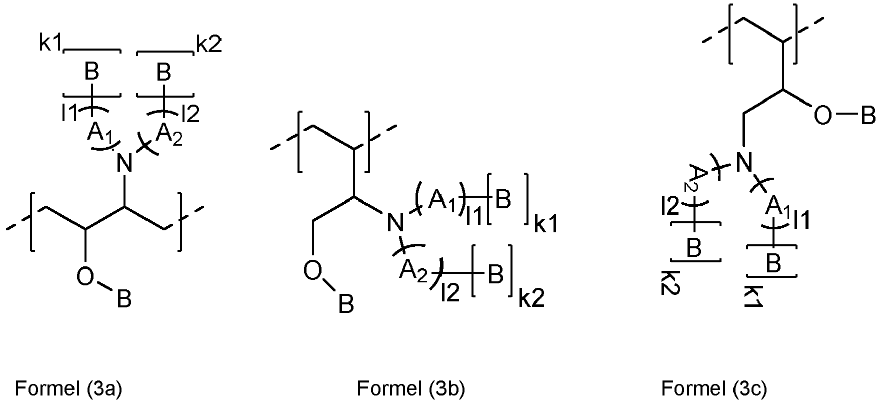

Die Reste A₁ und A₂ sind jeweils unabhängig voneinander organische Reste, bevorzugt mit 1 bis 22, am bevorzugtesten mit 1 bis 12 Kohlenstoffatomen, wobei die Reste A₁ und A₂ kovalent miteinander verbunden sein können. Die Reste A₁ und A₂ können dabei Heteroatome, vorzugsweise Stickstoff und Sauerstoff, enthalten.

Die Indizes k1 und k2 in den Formeln (3a), (3b) bzw. (3c) sind jeweils unabhängig voneinander ganze Zahlen von 0 bis 8, bevorzugt von 0 bis 6, am bevorzugtesten von 0 bis 4. Des Weiteren sind die Indizes I1 und I2 in den Formeln (3a), (3b) bzw. (3c) ganze Zahlen und jeweils unabhängig voneinander entweder 0 oder 1. Die durch Alkoxylierung entstandenen Reste B können somit k1-fach bzw. k2-fach an die Reste A₁ bzw. A₂ gebunden vorliegen, wobei die chemische Anbindung über ein Stickstoffatom oder ein Sauerstoffatom erfolgt, welches Teil von A₁ und A₂ ist. Die durch Alkoxylierung entstandenen Reste B können aber auch direkt am dargestellten Stickstoffatom gebunden vorliegen. Wenn in den Formeln (2a), (2b) oder (2c) der Rest A₁ oder A₂ ein Wasserstoffradikal ist, dann ist in den Formeln (3a), (3b) bzw. (3c) Index I1 bzw. I2 gleich 0 und k1 bzw. k2 gleich 1, d.h. der entsprechende Rest A₁ oder A₂ ist in den Formeln (3a), (3b) und (3c) nicht existent und dafür ist ein Polyetherrest B direkt an das dargestellte Stickstoffatom gebunden. Eine N-H-Gruppe in den Formeln (2a), (2b) oder (2c) wird also durch eine N-B-Gruppe ersetzt. Wenn in den Formeln (2a), (2b) oder (2c) der Rest A₁ oder A₂ ein organischer Rest ist, dann ist in den Formeln (3a), (3b) bzw. (3c) Index I1 bzw. I2 gleich 1. Wenn in den Formeln (2a), (2b) oder (2c) sowohl A₁ also auch A₂ Wasserstoffradikale sind, dann sind in den Formeln (3a), (3b) bzw. (3c) die Indizes I1 und I2 gleich 0 sowie k1 und k2 gleich 1, d.h. die Reste A₁ und A₂ in den Formeln (3a), (3b) und (3c) sind nicht existent und die Polyetherreste B sind direkt an das dargestellte Stickstoffatom gebunden. Die beiden N-H-Gruppen in den Formeln (2a), (2b) oder (2c) werden also jeweils durch eine N-B-Gruppe ersetzt.

Wird beispielsweise im Schritt b) als aminofunktionelle Verbindung (D) ein primäres Alkylamin eingesetzt und weist der Alkylrest keine weiteren gegenüber Epoxiden reaktiven Gruppen, wie z.B. OH- oder NH-Gruppen, auf, so gilt z.B. I1 = 1, k1 = 0, I2 = 0 und k2 = 1.

Wird beispielsweise im Schritt b) als aminofunktionelle Verbindung (D) das primäre Amin Ethanolamin eingesetzt, so ist z.B. A₁ ein zweibindiger Rest der Formel -CH₂CH₂O-, der in dieser Darstellung links über das Kohlenstoffatom an das Stickstoffatom der Aminogruppe und rechts über das Sauerstoffatom an einen Rest B gebunden ist, d.h. es gilt z.B. I1 = 1, k1 = 1, I2 = 0 und k2 = 1.

Wird beispielsweise im Schritt b) als aminofunktionelle Verbindung (D) das primäre Amin Tris(hydroxymethyl)aminomethan (TRIS, 2-Amino-2-(hydroxymethyl)propan-1,3-diol) eingesetzt, so ist z.B. A₁ ein vierbindiger Rest der Formel -C(CH₂O-)₃, der in dieser Darstellung links über das Kohlenstoffatom an das Stickstoffatom der Aminogruppe und rechts über die drei Sauerstoffatome an jeweils einen Rest B (und somit insgesamt an drei Reste B) gebunden ist, d.h. es gilt z.B. I1 = 1, k1 = 3, I2 = 0 und k2 = 1.

Wird beispielsweise im Schritt b) als aminofunktionelle Verbindung (D) das sekundäre Amin Diethanolamin eingesetzt, so sind z.B. A₁ und A₂ zweibindige Reste der Formel -CH₂CH₂O-, die in dieser Darstellung links über das Kohlenstoffatom an das Stickstoffatom der Aminogruppe und rechts über das Sauerstoffatom an einen Rest B gebunden sind, d.h. es gilt: I1 =1, k1 = 1, I2 = 1 und k2 = 1.

Wird beispielsweise im Schritt b) als aminofunktionelle Verbindung (D) das sekundäre Amin N-Methylethanolamin eingesetzt, dann ist z.B. A₁ eine Methylgruppe und A₂ ein zweibindiger Rest der Formel -CH₂CH₂O-, der in dieser Darstellung links über das Kohlenstoffatom an das Stickstoffatom der Aminogruppe und rechts über das Sauerstoffatom an den Rest B gebunden ist, d.h. es gilt: I1 = 1, k1 = 0, I2 = 1 und k2 = 1.

Wird beispielsweise im Schritt b) als aminofunktionelle Verbindung (D) das sekundäre Amin Piperidin eingesetzt, dann sind A₁ und A₂ kovalent miteinander verbunden und bilden zusammen den zweibindigen Rest -CH₂CH₂CH₂CH₂CH₂-, der in dieser Darstellung sowohl links und als auch rechts an das Stickstoffatom der Aminogruppe gebunden ist, d.h. es gilt: I1 = 1, k1 = 0, I2 = 1 und k2 = 0.

Es resultiert also vorzugsweise bei der Alkoxylierungsreaktion aus (zumindest fast) jeder seitständigen OH-und NH-Gruppe des mindestens einen hydroxy- und aminofunktionellen Polybutadiens (E) jeweils genau ein seitständiger Rest B. Der Rest B ist wiederum aus einem oder mehreren Monomeren, vorzugsweise aus mehreren Monomeren, der mindestens einen eingesetzten epoxyfunktionellen Verbindung (F) aufgebaut. Es ist möglich, wenn auch weniger bevorzugt, dass bei der Alkoxylierungsreaktion nicht aus jeder OH- oder NH-Gruppe des hydroxy- und aminofunktionellen Polybutadiens (E) ein seitständiger Rest B resultiert, sondern nur ein Teil, vorzugsweise aber der überwiegende Teil der OH- und NH-Gruppen im Schritt c) umgesetzt werden.

Im Sinne der Erfindung können prinzipiell alle dem Fachmann bekannten Alkoxylierungskatalysatoren eingesetzt werden, z.B. basische Katalysatoren wie Alkalihydroxide, Alkalialkoholate, Amine, Guanidine, Amidine, Phosphorverbindungen wie Triphenylphosphin, darüber hinaus Brønsted-saure und Lewis-saure Katalysatoren wie SnCl₄, SnCl₂, SnF₂, BF₃ und BF₃-Komplexe, sowie Doppelmetallcyanid (DMC)-Katalysatoren. Auf die Zugabe eines Katalysators kann gegebenenfalls verzichtet werden.

Vor der Epoxidzufuhr, also vor der Zugabe der mindestens einen eingesetzten epoxyfunktionellen Verbindung (F), wird der mit dem Starter und optional dem Katalysator teilweise befüllte Reaktor z.B. mit Stickstoff inertisiert. Dies geschieht beispielsweise durch mehrfaches abwechslungsweises Evakuieren und Zuführen von Stickstoff. Es ist vorteilhaft, den Reaktor nach dem letzten Aufdrücken von Stickstoff auf unter 200 mbar zu evakuieren. Die Addition der ersten Menge an Epoxidmonomer findet somit vorzugsweise in den evakuierten Reaktor statt. Die Dosage der Monomere erfolgt unter Rühren und ggf. Kühlen, um die freiwerdende Reaktionswärme abzuführen und die vorgewählte Reaktionstemperatur einzuhalten. Als Starter dient das mindestens eine hydroxy- und aminofunktionelle Polybutadien (E) oder es kann auch ein bereits entsprechend dem erfindungsgemäßen Verfahren hergestelltes polyethermodifiziertes aminofunktionelles Polybutadien (G) als Starter eingesetzt werden, wie weiter unten beschrieben wird.

In einer besonderen Ausführungsform kann beim Start der Monomerzugabe auf die Zugabe eines Katalysators verzichtet werden. Dies ist z.B. dann der Fall, wenn die am Polybutadien gebundenen Aminogruppen ausreichend reaktiv sind. Sind etwa ausreichend viele und nukleophile NH-Funktionen am Polybutadien vorhanden, so katalysiert der Starter selbst die Alkoxylierungsreaktion. Die Reaktionsgeschwindigkeit nimmt in der Regel mit der Polyetherkettenlänge ab. Zur Erzielung höhermolekularer Polyetherreste B kann es erforderlich oder förderlich sein, einen der vorgenannten Katalysatoren zu einem späteren Zeitpunkt der Alkoxylierungsreaktion hinzuzufügen.

### DMC-Katalyse

Vorzugsweise werden Zink/Cobalt-DMC-Katalysatoren eingesetzt, insbesondere solche, die Zinkhexacyanocobaltat(III) enthalten. Vorzugsweise werden die in US 5,158,922, US 20030119663, WO 01/80994 beschriebenen DMC-Katalysatoren eingesetzt. Die Katalysatoren können amorph oder kristallin sein.

Es ist bevorzugt, dass die Katalysatorkonzentration von >0 wppm bis 1000 wppm, bevorzugter von >0 wppm bis 700 wppm, am bevorzugtesten von >10 wppm bis 500 wppm bezogen auf die Gesamtmasse der entstehenden Produkte beträgt.

Vorzugsweise wird der Katalysator nur einmal in den Reaktor dosiert. Dieser sollte vorzugsweise sauber, trocken und frei von basischen Verunreinigungen sein, die den DMC-Katalysator inhibieren könnten. Die Katalysatormenge ist vorzugsweise so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der Starter als Suspensionsmittel.

Um die DMC-katalysierte Umsetzung zu starten, kann es vorteilhaft sein, den Katalysator zunächst mit einer Portion der mindestens einen epoxyfunktionellen Verbindung (F), vorzugsweise ausgewählt aus der Gruppe der Alkylenoxide, insbesondere mit Propylenoxid und/oder Ethylenoxid, zu aktivieren. Nach Anspringen der Alkoxylierungsreaktion kann mit der kontinuierlichen Monomerzugabe begonnen werden.

Die Reaktionstemperatur im Falle einer DMC-katalysierten Umsetzung in Schritt c) beträgt bevorzugt von 60 °C bis 200 °C, bevorzugter von 90 °C bis 160 °C und am bevorzugtesten von 100 °C bis 140 °C.

Der Innendruck des Reaktors im Falle einer DMC-katalysierten Umsetzung in Schritt c) beträgt bevorzugt von 0,02 bar bis 100 bar, bevorzugter von 0,05 bar bis 20 bar, am bevorzugtesten von 0,1 bar bis 10 bar (absolut).

Am bevorzugtesten wird eine DMC-katalysierte Umsetzung in Schritt c) bei einer Temperatur von 100 °C bis 140 °C und einem Druck von 0,1 bar bis 10 bar durchgeführt.

Die Umsetzung kann z.B. zwecks Viskositätserniedrigung in einem geeigneten Lösemittel durchgeführt werden. Nach Beendigung der Epoxidaddition folgt vorzugsweise eine Nachreaktion zur Vervollständigung des Umsatzes. Die Nachreaktion kann z.B. durch Weiterreaktion bei Reaktionsbedingungen (also Beibehaltung z.B. der Temperatur) ohne Zugabe von Edukten durchgeführt werden. Der DMC-Katalysator verbleibt üblicherweise im Reaktionsgemisch.

Nicht abreagierte Epoxide und eventuell weitere flüchtige Bestandteile können nach erfolgter Umsetzung durch Vakuumdestillation, Wasserdampf- oder Gasstrippen oder andere Methoden der Desodorierung entfernt werden. Das fertige Produkt wird abschließend bei <100 °C filtriert, um evtl. vorhandene Trübstoffe zu entfernen.

### Basische Katalyse

Alternativ zu den DMC-Katalysatoren können im Schritt c) auch basische Katalysatoren verwendet werden. Geeignet sind insbesondere Alkalimetallalkoholate wie Natriummethanolat und Kaliummethanolat, die als Feststoff oder in Form ihrer methanolischen Lösungen zugefügt werden. Darüber hinaus können alle Alkalihydroxide, insbesondere Natriumhydroxid und/oder Kaliumhydroxid eingesetzt werden, und zwar sowohl als Feststoff als auch als z.B. wässrige oder alkoholische Lösungen. Darüber hinaus können erfindungsgemäß auch basische Stickstoffverbindungen, bevorzugt Amine, Guanidine und Amidine, am bevorzugtesten tertiäre Amine wie Trimethylamin und Triethylamin verwendet werden.

Es ist bevorzugt, die basischen Katalysatoren in einer Konzentration von >0 mol-% bis 100 mol-%, bevorzugter von >0 mol-% bis 50 mol-%, am bevorzugtesten von 3 mol-% bis 40 mol-% bezogen auf die Summe der OH- und NH-Gruppen des Starters einzusetzen.

Die Reaktionstemperatur im Falle einer basisch katalysierten Umsetzung in Schritt c) beträgt bevorzugt von 80 °C bis 200 °C, bevorzugter von 90 °C bis 160 °C und am bevorzugtesten von 100 °C bis 160 °C.

Der Innendruck des Reaktors im Falle einer basisch katalysierten Umsetzung in Schritt c) beträgt bevorzugt von 0,2 bar bis 100 bar, bevorzugter von 0,5 bar bis 20 bar, am bevorzugtesten von 1 bar bis 10 bar (absolut).

Am bevorzugtesten wird die basisch katalysierte Umsetzung in Schritt c) bei einer Temperatur von 100 °C bis 160 °C und einem Druck von 1 bar bis 10 bar durchgeführt.

Die Umsetzung kann optional in einem geeigneten Lösemittel durchgeführt werden. Nach Beendigung der Epoxidaddition folgt vorzugsweise eine Nachreaktion zur Vervollständigung des Umsatzes. Die Nachreaktion kann z.B. durch Weiterreaktion bei Reaktionsbedingungen ohne Zugabe von Edukten durchgeführt werden. Nicht abreagierte Epoxide und eventuell weitere flüchtige Bestandteile können nach erfolgter Umsetzung durch Vakuumdestillation, Wasserdampf- oder Gasstrippen oder andere Methoden der Desodorierung entfernt werden. Flüchtige Katalysatoren, wie z.B. flüchtige Amine, werden dabei entfernt.

Zur Neutralisation der basischen Rohprodukte werden Säuren wie Phosphorsäure oder Schwefelsäure oder Carbonsäuren wie Essigsäure und Milchsäure zugefügt. Bevorzugt ist der Einsatz wässriger Phosphorsäure und Milchsäure. Die Einsatzmenge der jeweiligen Säure richtet sich nach der zuvor verwendeten Menge an basischem Katalysator. Das basische Polybutadien mit seitständigen Polyetherresten wird in Gegenwart der Säure bei vorzugsweise 40 °C bis 95 °C gerührt und anschließend in einer Vakuumdestillation bei <100 mbar und 80 °C bis 130 °C trocken destilliert. Das neutralisierte Produkt wird abschließend vorzugsweise bei <100 °C filtriert, um ausgefällte Salze zu entfernen.

Es ist bevorzugt, dass die erfindungsgemäßen Endprodukte einen Wassergehalt von <0,2 % (angegeben als Massenanteil bezogen auf die Gesamtmasse des Endprodukts) und eine Säurezahl von <0,5 mg KOH/g haben und praktisch phosphatfrei sind.

### Produkte als Starter

Nicht immer ist es möglich, die gewünschte Molmasse des Endpropdukts in nur einem einzigen Reaktionsschritt, insbesondere Alkoxylierungsschritt, zu erreichen. Besonders, wenn lange Polyetherseitenketten angestrebt werden und/oder der Starter aus Schritt b), also das mindestens eine hydroxy- und aminofunktionelle Polybutadien (E), eine hohe Funktionalität an OH- und NH-Gruppen aufweist, müssen große Mengen an Epoxidmonomeren addiert werden. Dies lässt die Reaktorgeometrie manchmal nicht zu. Die erfindungsgemäß hergestellten polyethermodifizierten aminofunktionellen Polybutadiene (G) aus Schritt c) tragen an den Enden ihrer seitständigen Polyetherreste jeweils eine OH-Gruppe und eignen sich daher ihrerseits als Starter für den Aufbau höhermolekularer Folgeprodukte. Sie stellen im Sinne der Erfindung Vorprodukte und Startverbindungen für die Synthese von Polybutadienen mit längeren Polyetherresten dar. Die Umsetzung der mindestens einen epoxyfunktionellen Verbindung (F) kann in Schritt c) also in mehreren Teilschritten erfolgen.

Ein mit Hilfe der DMC-Katalyse gemäß Schritt c) hergestelltes Produkt kann erfindungsgemäß wahlweise mittels DMC-Katalyse oder unter Einsatz einer der vorgenannten basischen oder sauren Katalysatoren durch erneute Addition von Epoxidmonomeren aufalkoxyliert werden. Optional kann weiterer DMC-Katalysator zugefügt werden, um z.B. die Reaktionsgeschwindigkeit bei der Kettenverlängerung zu steigern.

Ebenso kann ein unter Basenkatalyse hergestelltes Produkt aus Schritt c) wahlweise basisch, sauer oder mittels DMC-Katalyse zu höheren Molmassen alkoxyliert werden. In Schritt c) wird vorteilhaft auf die Neutralisation verzichtet, wenn beabsichtigt ist, das basische Vorprodukt weiter basenkatalysiert mit Monomeren umzusetzen. Optional kann weiterer basischer Katalysator zugefügt werden, um z.B. die Reaktionsgeschwindigkeit bei der Kettenverlängerung zu steigern.

### Optionaler Schritt d)

In einem optionalen weiteren Schritt d) wird das mindestens eine polyethermodifizierte aminofunktionelle Polybutadien (G) mit mindestens einem Endverkappungsreagenz (H) zu mindestens einem polyethermodifizierten aminofunktionellen Polybutadien (K) enthaltend endverkappte Polyetherreste umgesetzt. Dabei werden die Reste B des polyethermodifizierten Polybutadiens (G), welche terminal Hydroxygruppen aufweisen, terminal zu Ester-, Ether-, Urethan- und/oder Carbonatgruppen weiter umgesetzt. Die Endverkappung von Polyethern ist dem Fachmann bekannt, wie z.B. die Veresterung mit Carbonsäuren oder Carbonsäureanhydriden, insbesondere die Acetylierung mit Hilfe von Essigsäureanhydrid, die Veretherung mit halogenierten Kohlenwasserstoffen, insbesondere die Methylierung mit Methylchlorid nach dem Prinzip der Williamson-Ether-Synthese, die Urethanisierung durch Reaktion der OH-Gruppen mit Isocyanaten, insbesondere mit Monoisocyanaten wie Stearylisocyanat, und die Carbonatisierung durch Umsetzung mit Dimethylcarbonat und Diethylcarbonat.

### Optionaler Schritt e)

In einem optionalen Schritt e) wird das mindestens eine polyethermodifizierte aminofunktionelle Polybutadien (G) bzw. (K) farblich aufgehellt. Folgt der optionale Schritt e) auf den optionalen Schritt d) so wird dabei das mindestens eine polyethermodifizierte aminofunktionelle Polybutadien (K) enthaltend endverkappte Polyetherreste farblich aufgehellt. Wird auf den optionalen Schritt d) dagegen verzichtet, so folgt der optionale Schritt e) auf Schritt c) des erfindungsgemäßen Verfahrens und das mindestens eine polyethermodifizierte aminofunktionelle Polybutadien (G) wird farblich aufgehellt. Die Aufhellung kann beispielsweise durch den Zusatz von Aktivkohle, vorzugsweise in einem geeigneten Lösemittel, oder durch die Behandlung mit Wasserstoffperoxid erfolgen.

### Optionaler Schritt f)

In einem optionalen Schritt f) wird zumindest ein Teil der Aminogruppen des mindestens einen polyethermodifizierten aminofunktionellen Polybutadiens (G) bzw. (K) mit einer Säure oder einem Quaternisierungsreagenz wie Alkyl- und Benzylhalogeniden, Dimethylsulfat oder Chloressigsäure bzw. Natriumchloracetat zu quartären Ammoniumgruppen umgesetzt. Schritt f) kann wahlweise nach Schritt c) oder nach dem optionalen Schritt d) oder nach dem optionalen Schritt e) durchgeführt werden. Nach der Quaternisierung können die Produkte z.B. in Wasser oder organischen Lösemitteln gelöst oder dispergiert werden.

### Reaktoren

Als Reaktoren für das erfindungsgemäße Verfahren können prinzipiell alle geeigneten Reaktortypen zum Einsatz kommen, die die Reaktion und ihre eventuell vorhandene Wärmetönung beherrschen lassen. Die Reaktionsführung kann in verfahrenstechnisch bekannter Art und Weise kontinuierlich, semi-kontinuierlich oder auch batchweise erfolgen und lässt sich flexibel auf die vorhandenen produktionstechnischen Einrichtungen abstimmen. Neben herkömmlichen Rührkesselreaktoren können auch Strahlschlaufenreaktoren mit Gasphase und internen Wärmetauscherrohren, wie in WO 01/062826 beschrieben, verwendet werden. Darüber hinaus können gasphasenfreie Loop-Reaktoren eingesetzt werden.

### Polyethermodifizierte aminofunktionelle Polybutadiene

Gegenstand der vorliegenden Erfindung sind ferner kammständig (seitständig, seitenständig) mit Polyetherresten modifizierte aminofunktionelle Polybutadiene, wie sie durch das erfindungsgemäße Verfahren hergestellt werden können.
Ein weiterer Gegenstand der Erfindung ist daher ein polyethermodifiziertes aminofunktionelles Polybutadien (G) bzw. (K) erhältlich nach dem erfindungsgemäßen Verfahren.

Vorzugsweise ist das polyethermodifizierte aminofunktionelle Polybutadien (G) bzw. (K) ein lineares Polybutadien, das kammständig (seitständig, seitenständig) mit Polyetherresten modifiziert ist. Es ist also bevorzugt, dass das polyethermodifizierte aminofunktionelle Polybutadien (G) bzw. (K) ein lineares Polybutadien-Rückgrat und seitständige Polyetherreste aufweist.

Ein weiterer Gegenstand der Erfindung ist ebenso ein polyethermodifiziertes aminofunktionelles Polybutadien (G) bzw. (K), das vorzugsweise nach dem erfindungsgemäßen Verfahren erhältlich ist, dadurch gekennzeichnet, dass das polyethermodifizierte aminofunktionelle Polybutadien (G) bzw. (K) Wiederholungseinheiten ausgewählt aus der Gruppe bestehend aus den zweibindigen Resten 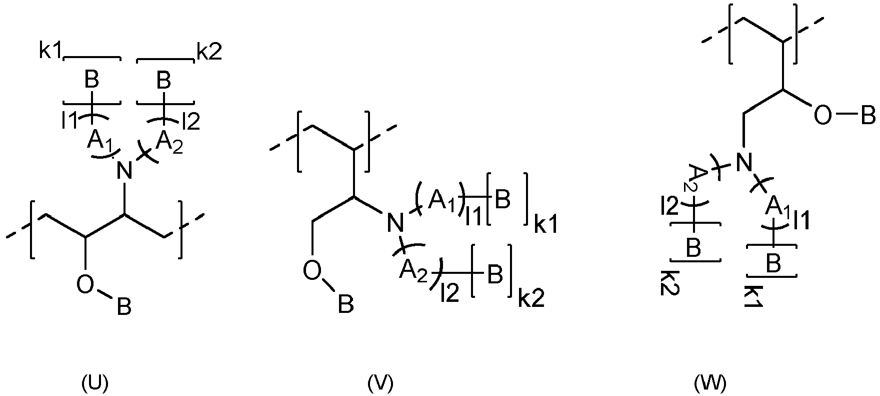 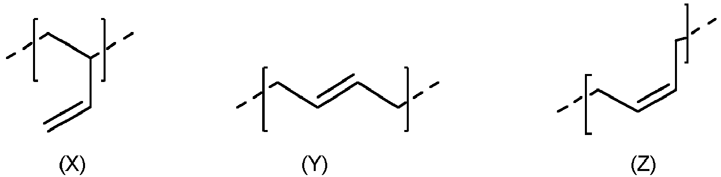 umfasst;
wobei
- A₁ und A₂: jeweils unabhängig voneinander organische Reste, bevorzugt mit 1 bis 22 Kohlenstoffatomen, am bevorzugtesten mit 1 bis 12 Kohlenstoffatomen, sind, wobei die Reste A₁ und A₂ kovalent miteinander verbunden sein können,
- B: jeweils unabhängig voneinander ein Rest der Formel (4a) ist, 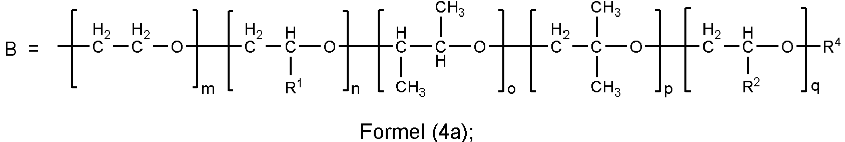 bevorzugt jeweils unabhängig voneinander ein Rest der Formel (4b) ist, 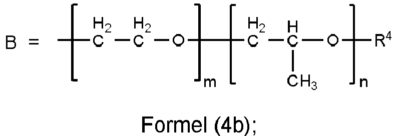 am bevorzugtesten jeweils unabhängig voneinander ein Rest der Formel (4c) ist, 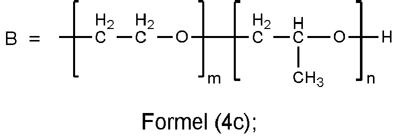
- R¹: jeweils unabhängig voneinander ein einbindiger Kohlenwasserstoffrest mit 1 bis 16 Kohlenstoffatomen ist;
bevorzugt jeweils unabhängig voneinander ein Alkylrest mit 1 bis 16 Kohlenstoffatomen oder ein Phenylrest ist;
am bevorzugtesten jeweils unabhängig voneinander ein Methylrest, ein Ethylrest oder ein Phenylrest ist;
- R²: ein Rest der Formel -CH₂-O-R³ ist;
- R³: jeweils unabhängig voneinander ein einbindiger Kohlenwasserstoffrest mit 3 bis 18 Kohlenstoffatomen ist;
bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist;
am bevorzugtesten ein tert-Butylphenylrest oder ein o-Kresylrest ist;
- R⁴: jeweils unabhängig voneinander ein einbindiger organischer Rest mit 1 bis 18 Kohlenstoffatomen oder Wasserstoff, bevorzugt Wasserstoff ist;
und
k1 und k2 jeweils unabhängig voneinander ganze Zahlen von 0 bis 8, bevorzugt von 0 bis 6, am bevorzugtesten von 0 bis 4 sind;
I1 und I2 ganze Zahlen und jeweils unabhängig voneinander entweder 0 oder 1 sind;
m, n, o, p und q jeweils unabhängig voneinander rationale Zahlen von 0 bis 300, bevorzugt von 0 bis 200, am bevorzugtesten von 0 bis 100 sind, mit der Maßgabe, dass die Summe aus m, n, o, p und q größer als 1, bevorzugt größer als 5, am bevorzugtesten größer als 10 ist;
die Summe aller Wiederholungseinheiten (U), (V) und (W) dividiert durch die Summe aller Wiederholungseinheiten (U), (V), (W), (X), (Y) und (Z) >0 % beträgt;
und jede Permutation der Wiederholungseinheiten (U), (V), (W), (X), (Y) und (Z) sowie der Wiederholungseinheiten im Rest B mitumfasst ist.

Die Reste R¹, R², R³ und R⁴ können dabei jeweils unabhängig voneinander linear oder verzweigt, gesättigt oder ungesättigt, aliphatisch oder aromatisch, substituiert oder unsubstituiert sein.

Die allgemeine Schreibweise 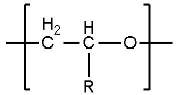 mit R = R¹ oder R² in Formel (4a) bzw. R = CH₃ in den Formeln (4b) und (4c) steht dabei sowohl für eine Einheit der Formel 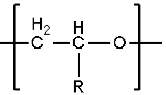 als auch eine für eine Einheit der Formel 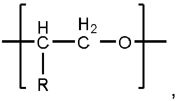 vorzugweise aber für eine Einheit der Formel

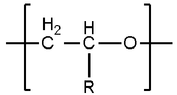

Die allgemeine Schreibweise 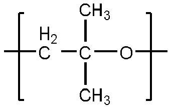 in Formel (4a) steht dabei sowohl für eine Einheit der Formel 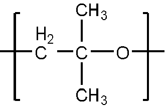 als auch eine für eine Einheit der Formel 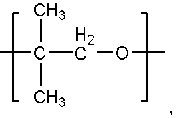 vorzugweise aber für eine Einheit der Formel

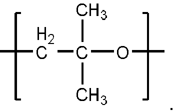

Es ist weiterhin bevorzugt, dass der Rest R⁴ jeweils unabhängig voneinander ausgewählt ist aus der Gruppe bestehend aus einwertigen Kohlenwasserstoffresten mit 1 bis 18 Kohlenstoffatomen, Acylresten -C(=O)R⁵, Urethanresten -C(=O)NH-R⁶, Carbonatresten -C(=O)O-R⁷ und Wasserstoff; bevorzugter ist R⁴ jeweils unabhängig voneinander ausgewählt ist aus der Gruppe bestehend aus Alkylresten mit 1 bis 18 Kohlenstoffatomen, Alkylenresten mit 1 bis 18 Kohlenstoffatomen, Acylresten -C(=O)R⁵, Urethanresten -C(=O)NH-R⁶, Carbonatresten -C(=O)O-R⁷ und Wasserstoff; am bevorzugtesten ist R⁴ Wasserstoff; wobei die Bezeichnung "Wasserstoff" für einen Wasserstoffrest / ein Wasserstoffradikal stehen soll.

R⁵ ist jeweils unabhängig voneinander ein Alkyl- oder ein Alkenylrest mit 1 bis 18 Kohlenstoffatomen, bevorzugt mit 1 bis 10 Kohlenstoffatomen, am bevorzugtesten ein Methylrest.

R⁶ ist jeweils unabhängig voneinander ein Alkyl- oder ein Arylrest mit 1 bis 18 Kohlenstoffatomen, bevorzugt mit 6 bis 18 Kohlenstoffatomen.

R⁷ ist jeweils unabhängig voneinander ein Alkylrest mit 1 bis 18 Kohlenstoffatomen, bevorzugt mit 1 bis 2 Kohlenstoffatomen.

Erfindungsgemäß beträgt die Summe (die Gesamtzahl) aller Wiederholungseinheiten (U), (V) und (W) dividiert durch die Summe (die Gesamtzahl) aller Wiederholungseinheiten (U), (V), (W), (X), (Y) und (Z) des mindestens einen polyethermodifizierten aminofunktionellen Polybutadiens (G) bzw. (K) >0 %, also von >0 % bis 100 %.

Das bedeutet umgekehrt, dass die Summe (die Gesamtzahl) aller Wiederholungseinheiten (X), (Y) und (Z) dividiert durch die Summe (die Gesamtzahl) aller Wiederholungseinheiten (U), (V), (W), (X), (Y) und (Z) des mindestens einen polyethermodifizierten aminofunktionellen Polybutadiens (G) bzw. (K) <100 % (also <100 % bis 0% beträgt.

Das bedeutet, dass >0 % (also von >0 % bis 100 %) der Gesamtheit der Wiederholungseinheiten (U), (V), (W), (X), (Y) und (Z) polyethermodifiziert sind.

Das bedeutet außerdem, dass <100 % (also von <100 % bis 0%) der Gesamtheit der Wiederholungseinheiten (U), (V), (W), (X), (Y) und (Z) nicht polyethermodifiziert sind.

Das bedeutet weiterhin, dass das polyethermodifizierte aminofunktionelle Polybutadien (G) bzw. (K) mindestens eine Wiederholungseinheit ausgewählt aus der Gruppe bestehend aus (U), (V) und (W) umfasst.

Es ist dabei bevorzugt, dass die Summe (die Gesamtzahl) aller Wiederholungseinheiten (U), (V) und (W) dividiert durch die Summe (die Gesamtzahl) aller Wiederholungseinheiten (U), (V), (W), (X), (Y) und (Z) des mindestens einen polyethermodifizierten aminofunktionellen Polybutadiens (G) bzw. (K) bevorzugt von >0 % bis <100 %, noch bevorzugter von >0 % bis 70 %, noch bevorzugter von 1 % bis 50 %, noch bevorzugter von 2 % bis 40 %, noch bevorzugter von 3 % bis 30 %, am bevorzugtesten von 4 % bis 20 % beträgt.

Das bedeutet, dass bevorzugt von >0 % bis <100 %, noch bevorzugter von >0 % bis 70 %, noch bevorzugter von 1 % bis 50 %, noch bevorzugter von 2 % bis 40 %, noch bevorzugter von 3 % bis 30 %, am bevorzugtesten von 4 % bis 20 % der Gesamtheit der Wiederholungseinheiten (U), (V), (W), (X), (Y) und (Z) polyethermodifiziert sind.

Es ist dabei weiterhin bevorzugt, dass die Summe (die Gesamtzahl) aller Wiederholungseinheiten (X), (Y) und (Z) dividiert durch die Summe (die Gesamtzahl) aller Wiederholungseinheiten (U), (V), (W), (X), (Y) und (Z) des mindestens einen polyethermodifizierten aminofunktionellen Polybutadiens (G) bzw. (K) von <100 % bis >0%, bevorzugter von <100 % bis 30 %, noch bevorzugter von 99 % bis 50 %, noch bevorzugter von 98 % bis 60 %, noch bevorzugter von 97 % bis 70 %, am bevorzugtesten von 96 % bis 80 % beträgt.

Das bedeutet, dass bevorzugt von <100 % bis >0%, bevorzugter von <100 % bis 30 %, noch bevorzugter von 99 % bis 50 %, noch bevorzugter von 98 % bis 60 %, noch bevorzugter von 97 % bis 70 %, am bevorzugtesten von 96 % bis 80 % der Gesamtheit der Wiederholungseinheiten (U), (V), (W), (X), (Y) und (Z) nicht polyethermodifiziert sind.

Es ist bevorzugt, dass der Massenanteil aller Wiederholungseinheiten (U), (V), (W), (X), (Y) und (Z) zusammengenommen bezogen auf die Gesamtmasse des polyethermodifizierten aminofunktionellen Polybutadiens (G) bzw. (K) mindestens 80%, bevorzugter mindestens 90%, noch bevorzugter mindestens 99%, am bevorzugtesten 100% beträgt.

Es ist bevorzugt, dass das polyethermodifizierte aminofunktionelle Polybutadien (G) bzw. (K) im Wesentlichen oder vollständig aus den Wiederholungseinheiten (U), (V), (W), (X), (Y) und (Z) besteht.

Es ist bevorzugt, dass das polyethermodifizierte aminofunktionelle Polybutadien (G) bzw. (K) ein mit seitständigen Polyetherresten ausgestattetes Polybutadien der Formel (5) ist, 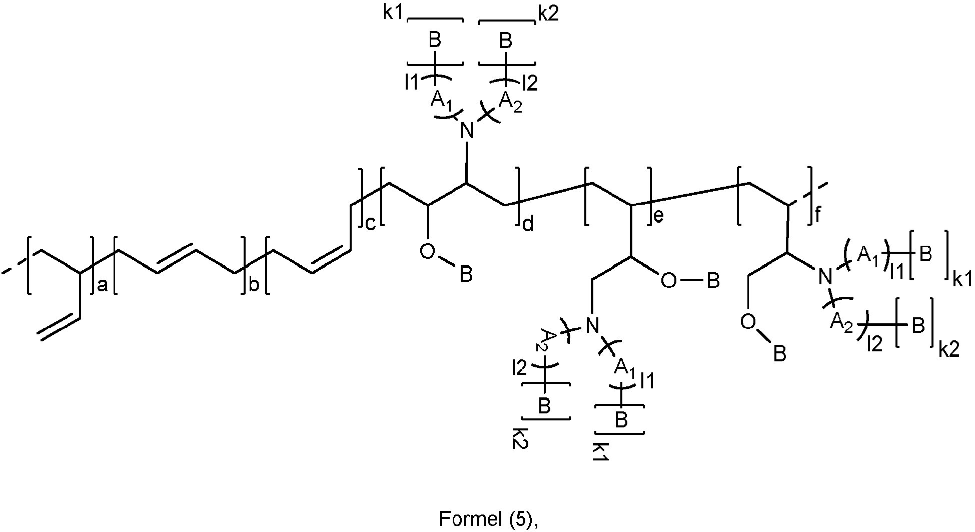 wobei der Anteil der in Formel (5) aufgeführten polyethermodifizierten Wiederholungseinheiten bezogen auf die Summe aller in Formel (5) aufgeführten Wiederholungseinheiten >0 % (also von >0 % bis 100 %), bevorzugter von >0 % bis <100%, noch bevorzugter von >0 % bis 70 %, noch bevorzugter von 1 % bis 50 %, noch bevorzugter von 2 % bis 40 %, noch bevorzugter von 3 % bis 30 %, am bevorzugtesten von 4 % bis 20 % beträgt, wobei sich der Anteil nach [(d+e+f)/(a+b+c+d+e+f)] * 100 % berechnet.

Das bedeutet, dass der Anteil der in Formel (5) aufgeführten nicht polyethermodifizierten Wiederholungseinheiten bezogen auf die Summe aller in Formel (5) aufgeführten Wiederholungseinheiten <100 % (also von <100 % bis 0%), bevorzugt von <100 % bis >0%, bevorzugter von <100 % bis 30 %, noch bevorzugter von 99 % bis 50 %, noch bevorzugter von 98 % bis 60 %, noch bevorzugter von 97 % bis 70 %, am bevorzugtesten von 96 % bis 80 % beträgt, wobei sich der Anteil nach [(a+b+c)/(a+b+c+d+e+f)] * 100 % berechnet.

Die Wiederholungseinheiten mit den Indizes a, b, c, d, e und f sind beliebig, statistisch über die Polybutadienkette verteilt. Alle angegebenen Indexwerte sind daher als Mittelwerte zu verstehen.

Es ist bevorzugt, dass der Massenanteil aller Wiederholungseinheiten mit den Indizes a, b, c, d, e und f zusammengenommen bezogen auf die Gesamtmasse des polyethermodifizierten aminofunktionellen Polybutadiens (G) bzw. (K) mindestens 80%, bevorzugter mindestens 90%, noch bevorzugter mindestens 99%, am bevorzugtesten 100% beträgt.

Es ist bevorzugt, dass das polyethermodifizierte aminofunktionelle Polybutadien (G) bzw. (K) im Wesentlichen oder vollständig aus den Wiederholungseinheiten mit den Indizes a, b, c, d, e und f besteht.

Es ist weiterhin bevorzugt, dass die polyethermodifizierten aminofunktionellen Polybutadiene (G) bzw. (K) dadurch gekennzeichnet sind, dass 0 % bis 80 %, bevorzugter 0 % bis 30 %, noch bevorzugter 0 % bis 10 % und am bevorzugtesten 0 % bis 5 % der enthaltenen Doppelbindungen 1,2-Vinyl-Doppelbindungen sind und 20 % bis 100 %, bevorzugter 70 % bis 100 %, noch bevorzugter 90 % bis 100 % und am bevorzugtesten 95 % bis 100 % der enthaltenen Doppelbindungen 1,4-Doppelbindungen sind.

Bevorzugt im Sinne der Erfindung sind daher Verbindungen der Formel (5) mit einem Gehalt von 0 % bis 80 % 1,2-Vinyl-Doppelbindungen (Index a) und 20 % bis 100 % 1,4-Doppelbindungen (Summe Indizes b und c), bevorzugter mit 0 % bis 30 % 1,2-Vinyl-Doppelbindungen und 70 % bis 100 % 1,4-Doppelbindungen, noch bevorzugter mit 0 % bis 10 % 1,2-Vinyl-Doppelbindungen und 90 % bis 100 % 1,4-Doppelbindungen und am bevorzugtesten 0 % bis 5 % 1,2-Vinyl-Doppelbindungen und 95 % bis 100 % 1,4-Doppelbindungen bezogen auf die Gesamtzahl der Doppelbindungen enthaltenden Wiederholungseinheiten (Summe a + b + c). Das Verhältnis von 1,4-*trans*-Doppelbindungen (Index b) und 1,4-*cis*-Doppelbindungen (Index c) ist beliebig.

Am bevorzugtesten sind Verbindungen der Formel (5) mit einem Gehalt von >95 % an Wiederholungseinheiten mit Index d bezogen auf die Summe der Wiederholungseinheiten d + e + f. Das Verhältnis der Wiederholungseinheiten e und f zueinander ist beliebig.

Die zahlenmittlere Molmasse Mₙ, gewichtsmittlere Molmasse M_{w} und Polydispersität des Polybutadienteils des polyethermodifizierten aminofunktionellen Polybutadiens (G) bzw. (K) sind beliebig. Unter dem Polybutadienteil wird dabei der Teil des polyethermodifizierten aminofunktionellen Polybutadiens (G) bzw. (K) verstanden, der vom verfahrensgemäß eingesetzten Polybutadien (A) stammt. In Formel (5) ist unter dem Polybutadienteil des polyethermodifizierten aminofunktionellen Polybutadiens (G) bzw. (K), der Teil des Polymers zu verstehen, der sich aus dem polyethermodifizierten aminofunktionellen Polybutadien (G) bzw. (K) abzüglich der Reste [B]ₖ₁(A₁)ₗ₁-N-(A₂)ₗ₂-[B]ₖ₂ und B-O ergibt. Dies gilt entsprechend auch für das oben genannte polyethermodifizierte aminofunktionelle Polybutadien (G) bzw. (K) umfassend Wiederholungseinheiten ausgewählt aus der Gruppe bestehend aus den zweibindigen Wiederholungseinheiten (U), (V), (W), (X), (Y) und (Z).

Es ist bevorzugt, dass die zahlenmittlere Molmasse Mₙ des Polybutadienteils des polyethermodifizierten Polybutadiens (G) bzw. (K) von 200 g/mol bis 20000 g/mol, bevorzugter von 500 g/mol bis 10000 g/mol, am bevorzugtesten von 700 g/mol bis 5000 g/mol beträgt.

Alternativ ist es bevorzugt, dass die zahlenmittlere Molmasse Mₙ des Polybutadienteils des polyethermodifizierten Polybutadiens (G) bzw. (K) von 2100 g/mol bis 20000 g/mol, bevorzugter von 2200 g/mol bis 10000 g/mol, am bevorzugtesten von 2300 g/mol bis 5000 g/mol beträgt.

Die zahlenmittlere Molmasse Mₙ des Polybutadienteils ist dabei als die zahlenmittlere Molmasse Mₙ des zugrundeliegenden Polybutadiens (A) definiert.

Es ist weiterhin bevorzugt, dass das polyethermodifizierte aminofunktionelle Polybutadien (G) bzw. (K) im Zahlenmittel 5 bis 360, bevorzugt 10 bis 180, am bevorzugtesten 15 bis 90 Wiederholungseinheiten aufweist, wobei die Wiederholungseinheiten aus der Gruppe bestehend aus (U), (V), (W), (X), (Y) und (Z) ausgewählt sind.

Alternativ ist es bevorzugt, dass das polyethermodifizierte aminofunktionelle Polybutadien (G) bzw. (K) im Zahlenmittel 35 bis 360, bevorzugt 40 bis 180, am bevorzugtesten 45 bis 90 Wiederholungseinheiten aufweist, wobei die Wiederholungseinheiten aus der Gruppe bestehend aus (U), (V), (W), (X), (Y) und (Z) ausgewählt sind.

Am bevorzugtesten sind solche polyethermodifizierten aminofunktionellen Polybutadiene (G) bzw. (K), die sich von den oben beschriebenen Polybutadienen (A) Polyvest^{®} 110 und Polyvest^{®} 130 der Evonik Industries AG / Evonik Operations GmbH sowie Lithene ultra AL und Lithene ActiV 50 von Synthomer PLC ableiten.

Die Molmasse und die Polydispersität der Reste B ist beliebig. Es ist aber bevorzugt, dass die mittlere Molmasse der Reste B von 30 g/mol bis 20000 g/mol, bevorzugter von 50 g/mol bis 10000 g/mol, noch bevorzugter von 100 g/mol bis 5000 g/mol, am bevorzugtesten von 150 g/mol bis 1000 g/mol beträgt. Die mittlere Molmasse der Reste B kann aus der Einwaage der eingesetzten Monomere bezogen auf die Anzahl der OH- und NH-Gruppen des eingesetzten hydroxy- und aminofunktionellen Polybutadiens (E) berechnet werden. Werden also beispielsweise 40 g Ethylenoxid eingesetzt und beträgt die Gesamtmenge aller OH- und NH-Gruppen des eingesetzten hydroxy- und aminofunktionellen Polybutadiens (E) zusammen 0,05 mol, so beträgt die mittlere Molmasse des Rests B 800 g/mol.

Die polyethermodifizierten aminofunktionellen Polybutadiene (G) bzw. (K) sind je nach Zusammensetzung und Molmasse flüssig, pastös oder fest.

Die zahlenmittlere Molmasse (Mₙ) der polyethermodifizierten aminofunktionellen Polybutadiene (G) bzw. (K) beträgt bevorzugt von 1000 g/mol bis 50000 g/mol, bevorzugter von 1500 g/mol bis 40000 g/mol, noch bevorzugter von 2000 g/mol bis 30000 g/mol, am bevorzugtesten von 3000 g/mol bis 10000 g/mol.

Ihre Polydispersität (M_{w}/Mₙ) ist in weiten Bereichen variabel. Die Polydispersität des mindestens einen polyethermodifizierten Polybutadiens (G) bzw. (K) beträgt bevorzugt von 1,5 bis 10, bevorzugter von 2 bis 8, am bevorzugtesten von 3 bis 5.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Allgemeine Methoden:

### Gel-Permeations-Chromatographie (GPC):

GPC-Messungen zur Bestimmung der Polydispersität (M_{w}/Mₙ), der gewichtsmittleren Molmasse (M_{w}) und der zahlenmittleren Molmasse (Mₙ) der epoxyfunktionellen Polybutadiene (C) wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard. GPC-Messungen zur Bestimmung der Polydispersität (M_{w}/Mₙ), der gewichtsmittleren Molmasse (M_{w}) und der zahlenmittleren Molmasse (Mₙ) der Polybutadiene (A) können auf dieselbe Weise durchgeführt werden.

GPC-Messungen zur Bestimmung der Polydispersität (M_{w}/Mₙ), der gewichtsmittleren Molmasse (M_{w}) und der zahlenmittleren Molmasse (Mₙ) der erfindungsgemäßen polyethermodifizierten aminofunktionellen Polybutadiene (G) wurden unter den folgenden Messbedingungen durchgeführt: Säulenkombination Jordi DVB 500 Å (Länge 30 cm), Jordi DVB Mixed Bed (Länge 30 cm), Temperatur 30 °C, THF/Triethylamin als mobile Phase, Fließrate 0,4 ml/min, Probenkonzentration 3 g/l, RI-Detektor, Auswertung gegen Polystyrol-Standard. Die GPC-Messungen zur Bestimmung der Polydispersität (M_{w}/Mₙ), der gewichtsmittleren Molmasse (M_{w}) und der zahlenmittleren Molmasse (Mₙ) der endverkappten polyethermodifizierten aminofunktionellen Polybutadiene (K) können auf dieselbe Weise durchgeführt werden.

### Bestimmung des Gehalts der 1,4-cis-, 1,4-trans- und 1,2-Einheiten im Polybutadien:

Die Bestimmung des Gehalts an 1,4-cis-, 1,4-trans- und 1,2-Einheiten kann mit Hilfe der ¹H-NMR-Spektroskopie erfolgen. Diese Methode ist dem Fachmann geläufig.

### Bestimmung des Gehalts an Epoxidgruppen im epoxyfunktionellen Polybutadien (C) (Epoxidgehalt, Epoxidierungsgrad):

Die Bestimmung des Gehalts an Epoxidgruppen erfolgte mit Hilfe der ¹³C-NMR-Spektroskopie. Verwendet wurde ein NMR-Spektrometer vom Typ Bruker Avance 400. Die Proben wurden dazu in Deuterochloroform gelöst. Der Epoxidgehalt ist definiert als der Anteil an epoxidierten Butadieneinheiten in mol-% bezogen auf die Gesamtheit aller in der Probe enthaltenen Wiederholungseinheiten. Dies entspricht der Anzahl der Epoxidgruppen des epoxyfunktionellen Polybutadiens (C) dividiert durch die Anzahl der Doppelbindungen des eingesetzten Polybutadiens (A).

### Bestimmung der Säurezahl:

Die Säurezahlbestimmung wurde nach einem Titrationsverfahren in Anlehnung an die DIN EN ISO 2114 durchgeführt.

### Synthesebeispiele:

### Schritt a), Herstellung epoxidierter Polybutadiene

### Beispiel A1:

Zur Herstellung eines epoxidierten Polybutadiens wurde ein Polybutadien der Formel (1) mit der Struktur x=1%, y=24% und z=75% eingesetzt (Polyvest^{®} 110). Nach dem Stand der Technik wurden in einem 5-Liter-Reaktor unter einer Stickstoffatmosphäre 1500 g Polyvest^{®} 110 und 146,3 g konz. Ameisensäure in 1500 g Chloroform bei Raumtemperatur vorgelegt. Anschließend wurden 540 g 30%-ige H₂O₂-Lösung (30 Gew.-% H₂O₂ bezogen auf die Gesamtmasse der wässrigen Lösung) langsam zugetropft und die Lösung dann für 7 Stunden auf 50 °C erhitzt. Nach Ende der Reaktion wurde auf Raumtemperatur abgekühlt, die organische Phase abgetrennt und diese noch viermal mit dest. H₂O gewaschen. Überschüssiges Chloroform und restliches Wasser wurden abdestilliert. Es wurden 1481 g des Produktes erhalten, welches mit 1000 ppm Irganox^{®} 1135 versetzt und unter Stickstoff gelagert wurde. Die Auswertung mittels ¹³C-NMR ergab einen Epoxidierungsgrad von ca. 15,8 % der Doppelbindungen. Die Auswertung mittels GPC ergab: M_{w}=4690 g/mol ; Mn=1982 g/mol ; M_{w}/Mₙ = 2,4.

### Schritt b), Herstellung aminofunktioneller Polybutadiene

### Beispiel B1:

Zur Herstellung eines aminofunktionellen Polybutadiens mit einem Aminierungsgrad von ca. 15,8 % wurde das in Beispiel A1 hergestellte epoxidierte Polybutadien eingesetzt. Der Aminierungsgrad ist dabei die Anzahl der Aminogruppen des aminofunktionellen Polybutadiens dividiert durch die Anzahl der Doppelbindungen des in Schritt a) eingesetzten Polybutadiens. Zur Herstellung wurden in einem 1-Liter-Vierhalskolben unter einer Stickstoffatmosphäre 800 g des epoxidierten Polybutadiens mit 136,3 g Ethanolamin und 6,8 g Lithiumbromid vorgelegt und unter Rühren auf 180 °C erhitzt. Das Gemisch wurde für 15 Stunden bei dieser Temperatur gerührt. Während der Reaktion stieg die Viskosität an. Nach beendeter Reaktion wurden flüchtige Komponenten bei 180 °C und 20 mbar destillativ entfernt. Das Produkt wurde auf 60 °C abgekühlt. Es wurden 908 g eines gelblichen Produkts erhalten und unter Stickstoff gelagert. Die Auswertung mittels ¹³C-NMR ergab einen vollständigen Umsatz aller Epoxidgruppen woraus sich ein Aminierungsgrad von ca. 15,8 % ergibt.

### Schritt c), Alkoxylierung aminofunktioneller Polybutadiene

### Beispiel C1:

In einem 1,5-Liter-Autoklaven wurden 151 g des in Beispiel B1 hergestellten hydroxy- und aminofunktionellen Polybutadiens unter Stickstoff vorgelegt und unter Rühren auf 115 °C aufgeheizt. Der Reaktor wurde bis auf einen Innendruck von 30 mbar evakuiert, um evtl. vorhandene flüchtige Inhaltsstoffe destillativ zu entfernen. 15,9 g Ethylenoxid wurden in 5 min bei 115 °C zugeführt. Der Reaktorinnendruck stieg auf einen Maximalwert von 3,4 bar (absolut) an und nahm im Laufe der Reaktion kontinuierlich ab. Nach 5,5 h war eine Druckkonstanz bei 0,6 bar (absolut) erreicht. Bei 115 °C und 20 mbar wurden flüchtige Komponenten entfernt, der Reaktor mit N₂ auf Normaldruck entspannt und das Reaktionsgemisch auf 40 °C gekühlt. Anschließend wurden 26,9 g 30 %-ige Natriummethanolat-Lösung (30 Gew.-% Natriummethanolat in Methanol bezogen auf Gesamtmasse der Lösung) zugegeben, der Reaktorinhalt mit Stickstoff inertisiert und unter Rühren auf 115 °C erhitzt. Der Reaktorinnendruck wurde dabei auf 20 mbar gesenkt und Methanol destillativ entfernt. 164,7 g Ethylenoxid wurden bei 115 °C unter Rühren und Kühlen in 1,5 h bei maximal 3,4 bar Innendruck zugefügt. Während der Nachreaktion von 3 h bei 115 °C fiel der Innendruck kontinuierlich bis zur Druckkonstanz bei 0,5 bar (absolut). Flüchtige Anteile wie restliches Ethylenoxid wurden im Vakuum abdestilliert. Das Produkt wurde auf unter 80 °C gekühlt, mit 14,9 g 90%-ige Milchsäure (90 Gew.-% Milchsäure in Wasser bezogen auf Gesamtmasse der Lösung) auf eine Säurezahl von 0,1 mg KOH/g neutralisiert, mit 1000 ppm Irganox^{®} 1135 versetzt und abgelassen. 317 g eines viskosen, orange-rot farbenen, leicht trüben polyethermodifzierten aminofunktionellen Polybutadiens wurden abgelassen und unter Stickstoff gelagert. Die Gesamtmenge an Ethylenoxid entsprach im Mittel 3,8 Ethylenoxid-Einheiten pro reaktiver NH/OH-Gruppe. Die Auswertung mittels GPC ergab: M_{w}= 19.484 g/mol ; Mₙ= 4474 g/mol ; M_{w}/Mₙ= 3,45.

### Beispiel C2:

In einem 1,5-Liter-Autoklaven wurden 181 g des in Beispiel B1 hergestellten aminierten Polybutadiens und unter Stickstoff vorgelegt und unter Rühren auf 115 °C aufgeheizt. Der Reaktor wurde bis auf einen Innendruck von 30 mbar evakuiert, um evtl. vorhandene flüchtige Inhaltsstoffe destillativ zu entfernen. 25,2 g Propylenoxid wurden in 5 min bei 115 °C zugeführt. Der Reaktorinnendruck stieg auf einen Maximalwert von 2,4 bar (absolut) an und nahm im Laufe der Reaktion kontinuierlich ab. Nach 4,5 h war eine Druckkonstanz bei 0,7 bar (absolut) erreicht. Bei 115 °C und 20 mbar wurden flüchtige Komponenten entfernt, der Reaktor mit N₂ auf Normaldruck entspannt und das Reaktionsgemisch auf 40 °C gekühlt. Anschließend wurden 32,2 g 30 %-ige Natriummethanolat-Lösung (30 Gew.-% Natriummethanolat in Methanol bezogen auf Gesamtmasse der Lösung) zugegeben, der Reaktorinhalt mit Stickstoff inertisiert und unter Rühren auf 115 °C erhitzt. Der Reaktorinnendruck wurde dabei auf 20 mbar gesenkt und Methanol destillativ entfernt. 260 g Propylenoxid wurden bei 115 °C unter Rühren und Kühlen in 1,5 h bei maximal 2,9 bar Innendruck zugefügt. Während der Nachreaktion von 2 h bei 115 °C fiel der Innendruck kontinuierlich bis zur Druckkonstanz bei 0,3 bar (absolut). Flüchtige Anteile wie restliches Propylenoxid wurden im Vakuum abdestilliert. Das Produkt wurde auf unter 80 °C gekühlt, mit 17,9 g 90%-ige Milchsäure (90 Gew.-% Milchsäure in Wasser bezogen auf Gesamtmasse der Lösung) auf eine Säurezahl von 0,1 mg KOH/g neutralisiert, mit 1000 ppm Irganox^{®} 1135 versetzt und abgelassen. 421 g eine viskosen, orange farbenen, leicht trüben polyethermodifzierten aminofunktionellen Polybutadiens wurden abgelassen und unter Stickstoff gelagert. Die Gesamtmenge an Propylenoxid entsprach im Mittel 3,8 Propylenoxid-Einheiten pro reaktiver NH/OH-Gruppe. Die Auswertung mittels GPC ergab: M_{w} = 25.386 g/mol ; Mₙ= 5226 g/mol ; M_{w}/Mₙ= 4,86.

### Beispiel C3:

### (Stöchiometrie: 5 EO/5 PO pro reaktive NH/OH-Gruppe)

In einem 1,5-Liter-Autoklaven wurden 197 g des in Beispiel B1 hergestellten aminierten Polybutadiens und unter Stickstoff vorgelegt und unter Rühren auf 115 °C aufgeheizt. Der Reaktor wurde bis auf einen Innendruck von 30 mbar evakuiert, um evtl. vorhandene flüchtige Inhaltsstoffe destillativ zu entfernen. 27,4 g Propylenoxid wurden in 5 min bei 115 °C zugeführt. Der Reaktorinnendruck stieg auf einen Maximalwert von 2,3 bar (absolut) an und nahm im Laufe der Reaktion kontinuierlich ab. Nach 4 h war eine Druckkonstanz bei 0,7 bar (absolut) erreicht. Bei 115 °C und 20 mbar wurden flüchtige Komponenten entfernt, der Reaktor mit N₂ auf Normaldruck entspannt und das Reaktionsgemisch auf 40 °C gekühlt. Anschließend wurden 17,6 g 30 %-ige Natriummethanolat-Lösung (30 Gew.-% Natriummethanolat in Methanol bezogen auf Gesamtmasse der Lösung) zugegeben, der Reaktorinhalt mit Stickstoff inertisiert und unter Rühren auf 115 °C erhitzt. Der Reaktorinnendruck wurde dabei auf 20 mbar gesenkt und Methanol destillativ entfernt. Eine Mischung aus 382 g Propylenoxid und 310 g Ethylenoxid wurde bei 115 °C unter Rühren und Kühlen in 6 h bei maximal 3,2 bar Innendruck zugefügt. Während der Nachreaktion von 2,5 h bei 115 °C fiel der Innendruck kontinuierlich bis zur Druckkonstanz bei 0,4 bar (absolut). Flüchtige Anteile wie restliches Propylenoxid und Ethylenoxid wurden im Vakuum abdestilliert. Das Produkt wurde auf unter 80 °C gekühlt, mit 30%-iger Phosphorsäure (30 Gew.-% Phosphosäure in Wasser bezogen auf Gesamtmasse der Lösung) auf eine Säurezahl von 0,1 mg KOH/g neutralisiert, mit 500 ppm Irganox^{®} 1135 versetzt und über ein Filter abgelassen. 881 g eines viskosen, orange farbenen, klaren polyethermodifzierten aminofunktionellen Polybutadiens wurden abgelassen und unter Stickstoff gelagert. Die Gesamtmenge an Ethylenoxid und Propylenoxid entsprach im Mittel 5 Ethylenoxid-Einheiten und 5 Propylenoxideinheiten pro reaktiver NH/OH-Gruppe. Die Auswertung mittels GPC ergab: M_{w} = 32.145 g/mol ; Mₙ = 8349 g/mol ; Mw/Mn = 3,85.

## Patentansprüche

1. Verfahren zur Herstellung von einem oder mehreren polyethermodifizierten aminofunktionellen Polybutadienen, umfassend die Schritte:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer aminofunktionellen Verbindung (D) zu mindestens einem hydroxy- und aminofunktionellen Polybutadien (E);
c) Umsetzung des mindestens einen hydroxy- und aminofunktionellen Polybutadiens (E) mit mindestens einer epoxyfunktionellen Verbindung (F) zu mindestens einem polyethermodifizierten aminofunktionellen Polybutadien (G).

2. Verfahren nach Anspruch 1, weiterhin umfassend mindestens einen der folgenden Schritte:
d) Umsetzung des mindestens einen polyethermodifizierten aminofunktionellen Polybutadiens (G) mit mindestens einem Endverkappungsreagenz (H) zu mindestens einem polyethermodifizierten aminofunktionellen Polybutadien (K) enthaltend endverkappte Polyetherreste;
e) Farbaufhellung des mindestens einen polyethermodifizierten aminofunktionellen Polybutadiens (G) bzw. (K);
f) Umsetzung zumindest eines Teils der Aminogruppen des mindestens einen polyethermodifizierten aminofunktionellen Polybutadiens (G) bzw. (K) zu quartären Ammoniumgruppen mittels einer Säure und/oder einem Quaternisierungsreagenz.

3. Verfahren nach einem der Ansprüche 1 oder 2, **dadurch gekennzeichnet, dass** von den Doppelbindungen aller eingesetzten Polybutadiene (A) 0 % bis 80 % 1,2-Vinyl-Doppelbindungen und 20 % bis 100 % 1,4-Doppelbindungen, bevorzugt 0 % bis 30 % 1,2-Vinyl-Doppelbindungen und 70 % bis 100 % 1,4-Doppelbindungen, bevorzugter 0 % bis 10 % 1,2-Vinyl-Doppelbindungen und 90 % bis 100 % 1,4-Doppelbindungen, am bevorzugtesten 0 % bis 5 % 1,2-Vinyl-Doppelbindungen und 95 % bis 100 % 1,4-Doppelbindungen sind.

4. Verfahren nach einem der Ansprüche 1 bis 3, **dadurch gekennzeichnet, dass** die zahlenmittlere Molmasse Mₙ des mindestens einen Polybutadiens (A) von 200 g/mol bis 20000 g/mol, bevorzugt von 500 g/mol bis 10000 g/mol, am bevorzugtesten von 700 g/mol bis 5000 g/mol beträgt.

5. Verfahren nach einem der Ansprüche 1 bis 4, **dadurch gekennzeichnet, dass** von >0 % bis <100 %, bevorzugt von >0 % bis 70 %, bevorzugter von 1 % bis 50 %, noch bevorzugter von 2 % bis 40 %, noch bevorzugter von 3 % bis 30 % und am bevorzugtesten von 4 % bis 20 % der Doppelbindungen des mindestens einen Polybutadiens (A) epoxidiert werden.

6. Verfahren nach einem der Ansprüche 1 bis 5, **dadurch gekennzeichnet, dass** das mindestens eine Epoxidierungsreagenz (B) Perameisensäure enthält, welche vorzugweise *in situ* aus Ameisensäure und Wasserstoffperoxid gebildet wird.

7. Verfahren nach einem der Ansprüche 1 bis 6, **dadurch gekennzeichnet, dass** die mindestens eine aminofunktionelle Verbindung (D) ausgewählt ist aus Verbindungen mit mindestens einer primären und/oder mindestens einer sekundären Aminogruppe; bevorzugt aus organischen Verbindungen mit mindestens einer primären und/oder mindestens einer sekundären Aminogruppe; bevorzugter aus organischen Verbindungen mit 1 bis 22 Kohlenstoffatomen sowie mindestens einer primären und/oder mindestens einer sekundären Aminogruppe; noch bevorzugter aus organischen Verbindungen mit 1 bis 12 Kohlenstoffatomen sowie mindestens einer primären und/oder mindestens einer sekundären Aminogruppe; am bevorzugtesten aus der Gruppe bestehend aus Butylamin, Isobutylamin, Hexylamin, Octylamin, 2-Ethylhexylamin, Decylamin, Laurylamin, Ethanolamin, Isopropanolamin, Diethanolamin, Diisopropanolamin, N-Methylethanolamin, N-Methylisopropanolamin, 2-Amino-2-methyl-1-propanol, 2-Amino-2-ethyl-1,3-propandiol, Tris(hydroxymethyl)aminomethan Tris(hydroxymethyl)aminomethan (TRIS, 2-Amino-2-(hydroxymethyl)propan-1,3-diol), Morpholin, Piperidin, Cyclohexylamin, N,N-Dimethylaminopropylamin (DMAPA) und Benzylamin.

8. Verfahren nach einem der Ansprüche 1 bis 7, **dadurch gekennzeichnet, dass** im Schritt b) die Gesamtzahl der NH-Gruppen aller aminofunktionellen Verbindungen (D) zur Gesamtzahl der Epoxidgruppen aller epoxyfunktionellen Polybutadiene (C) von 0,8:1 bis 20:1, bevorzugter von 0,9:1 bis 10:1, noch bevorzugter 1:1 bis 5:1, am bevorzugtesten von 1:1 bis 3:1 beträgt.

9. Verfahren nach einem der Ansprüche 1 bis 8, **dadurch gekennzeichnet, dass** im Schritt b) ein Katalysator eingesetzt wird, bevorzugt ausgewählt aus der Gruppe bestehend aus Lewis-Säuren und Brønsted-Säuren; bevorzugter aus der Gruppe bestehend aus Wasser, Phenolen, Alkoholen, Carbonsäuren, Ammoniumverbindungen, Phosphoniumverbindungen und Lithiumbromid; noch bevorzugter aus der Gruppe bestehend aus Carbonsäuren, Phenolen, Ammoniumverbindungen, Phosphoniumverbindungen und Lithiumbromid, noch bevorzugtester aus der Gruppe bestehend aus Carbonsäuren, Phenol und Lithiumbromid, am bevorzugtesten Lithiumbromid.

10. Verfahren nach einem der Ansprüche 1 bis 9, **dadurch gekennzeichnet, dass** die mindestens eine im Schritt c) eingesetzte epoxyfunktionelle Verbindung ausgewählt ist
a. aus der Gruppe der Alkylenoxide mit 2 bis 18 Kohlenstoffatomen,
bevorzugt aus der Gruppe der Alkylenoxide mit 2 bis 8 Kohlenstoffatomen,
am bevorzugtesten ausgewählt aus der Gruppe bestehend aus Ethylenoxid, Propylenoxid, 1-Butylenoxid, *cis*-2-Butylenoxid, *trans*-2-Butylenoxid, Isobutylenoxid und Styroloxid,
und/oder
b. aus der Gruppe der Glycidylverbindungen,
bevorzugt aus der Gruppe der monofunktionellen Glycidylverbindungen,
am bevorzugtesten aus der Gruppe bestehend aus Phenylglycidylether, o-Kresylglycidylether, tert-Butylphenylglycidylether, Allylglycidylether, Butylglycidylether, 2-Ethylhexylglycidylether, C₁₂/C₁₄-Fettalkoholglycidylether und C₁₃/C₁₅-Fettalkoholglycidylether.

11. Verfahren nach einem der Ansprüche 1 bis 10, **dadurch gekennzeichnet, dass** im Schritt c) ein Alkoxylierungskatalysator eingesetzt wird; bevorzugt ausgewählt aus der Gruppe bestehend aus Alkalihydroxiden, Alkalialkoholaten, Aminen, Guanidinen, Amidinen, Phosphinen, SnCl₄, SnCl₂, SnF₂, BF₃, BF₃-Komplexen und Doppelmetallcyanid (DMC)-Katalysatoren; bevorzugter ausgewählt aus der Gruppe bestehend aus Zn/Co-Doppelmetallcyanid-Katalysatoren, Aminen, Guanidinen, Amidinen, Alkalihydroxiden und Alkalialkoholaten; am bevorzugtesten ausgewählt aus der Gruppe bestehend aus Alkalialkoholaten.

12. Polyethermodifiziertes aminofunktionelles Polybutadien (G) bzw. (K) erhältlich nach einem Verfahren nach einem der Ansprüche 1 bis 11.

13. Polyethermodifiziertes aminofunktionelles Polybutadien (G) bzw. (K), vorzugsweise nach Anspruch 12, **dadurch gekennzeichnet, dass** das polyethermodifizierte aminofunktionelle Polybutadien (G) bzw. (K) Wiederholungseinheiten ausgewählt aus der Gruppe bestehend aus den zweibindigen Resten 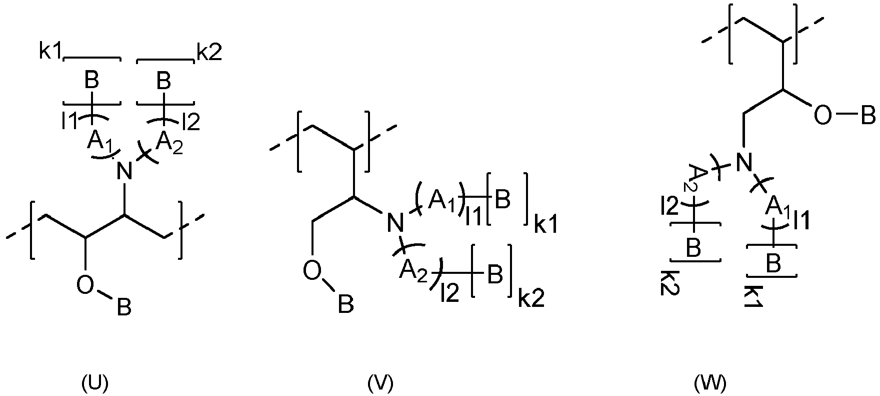 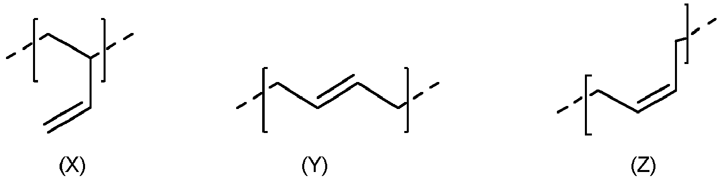 umfasst;
wobei
A₁ und A₂ jeweils unabhängig voneinander organische Reste, bevorzugt mit 1 bis 22 Kohlenstoffatomen, am bevorzugtesten mit 1 bis 12 Kohlenstoffatomen, sind, wobei die Reste A₁ und A₂ kovalent miteinander verbunden sein können,
B jeweils unabhängig voneinander ein Rest der Formel (4a) ist, 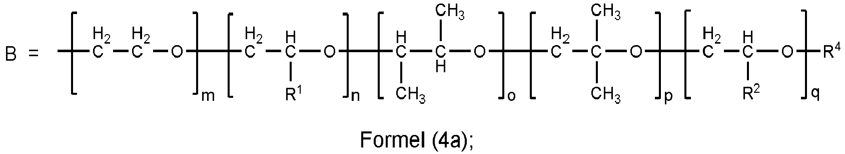 bevorzugt jeweils unabhängig voneinander ein Rest der Formel (4b) ist, 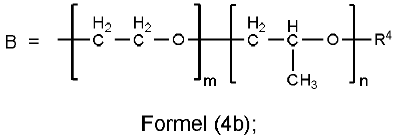 am bevorzugtesten jeweils unabhängig voneinander ein Rest der Formel (4c) ist, 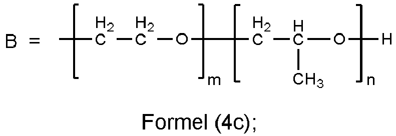
R¹ jeweils unabhängig voneinander ein einbindiger Kohlenwasserstoffrest mit 1 bis 16 Kohlenstoffatomen ist;
bevorzugt jeweils unabhängig voneinander ein Alkylrest mit 1 bis 16 Kohlenstoffatomen oder ein Phenylrest ist;
am bevorzugtesten jeweils unabhängig voneinander ein Methylrest, ein Ethylrest oder ein Phenylrest ist;
R² ein Rest der Formel -CH₂-O-R³ ist;
R³ jeweils unabhängig voneinander ein einbindiger Kohlenwasserstoffrest mit 3 bis 18 Kohlenstoffatomen ist;
bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist;
am bevorzugtesten ein tert-Butylphenylrest oder ein o-Kresylrest ist;
R⁴ jeweils unabhängig voneinander ein einbindiger organischer Rest mit 1 bis 18 Kohlenstoffatomen oder Wasserstoff, bevorzugt Wasserstoff ist;
und
k1 und k2 jeweils unabhängig voneinander ganze Zahlen von 0 bis 8, bevorzugt von 0 bis 6, am bevorzugtesten von 0 bis 4 sind;
I1 und I2 ganze Zahlen und jeweils unabhängig voneinander entweder 0 oder 1 sind;
m, n, o, p und q jeweils unabhängig voneinander rationale Zahlen von 0 bis 300, bevorzugt von 0 bis 200, am bevorzugtesten von 0 bis 100 sind, mit der Maßgabe, dass die Summe aus m, n, o, p und q größer als 1, bevorzugt größer als 5, am bevorzugtesten größer als 10 ist;
die Summe aller Wiederholungseinheiten (U), (V) und (W) dividiert durch die Summe aller Wiederholungseinheiten (U), (V), (W), (X), (Y) und (Z) >0 % beträgt;
und jede Permutation der Wiederholungseinheiten (U), (V), (W), (X), (Y) und (Z) sowie der Wiederholungseinheiten im Rest B mitumfasst ist.

14. Polyethermodifiziertes aminofunktionelles Polybutadien (G) bzw. (K) nach Anspruch 12 oder 13, **dadurch gekennzeichnet, dass** die Summe aller Wiederholungseinheiten (U), (V) und (W) dividiert durch die Summe aller Wiederholungseinheiten (U), (V), (W), (X), (Y) und (Z) von >0 % bis <100 %, bevorzugt von >0 % bis 70 %, bevorzugter von 1 % bis 50 %, noch bevorzugter von 2 % bis 40 %, noch bevorzugter von 3 % bis 30 %, am bevorzugtesten von 4 % bis 20 % beträgt.

15. Polyethermodifiziertes Polybutadien (G) bzw. (K) nach mindestens einem der Ansprüche 12 bis 14, **dadurch gekennzeichnet, dass** es sich um ein Polybutadien der Formel (5) handelt, 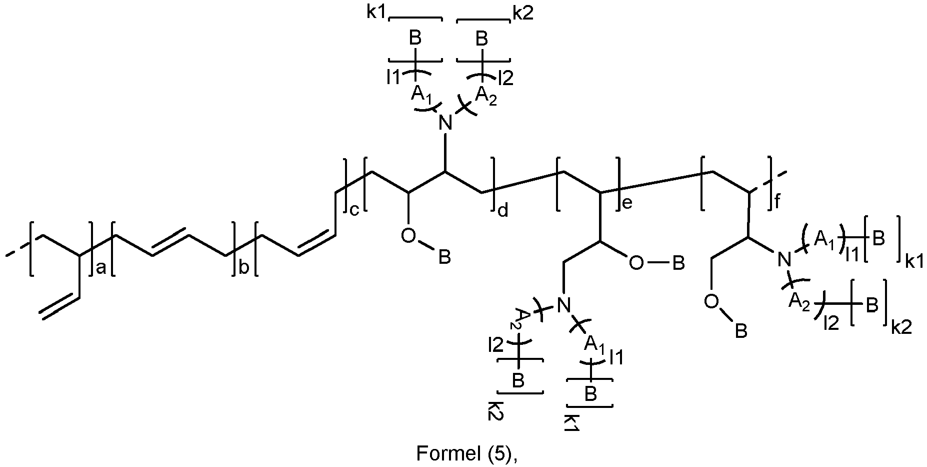 wobei der Anteil der in Formel (5) aufgeführten polyethermodifizierten Wiederholungseinheiten bezogen auf die Summe aller in Formel (5) aufgeführten Wiederholungseinheiten >0 %, bevorzugt von >0 % bis <100 %, bevorzugter von >0 % bis 70%, noch bevorzugter von 1 % bis 50 %, noch bevorzugter von 2 % bis 40 %, noch bevorzugter von 3 % bis 30 %, am bevorzugtesten 4 % bis 20 % beträgt, wobei sich der Anteil nach [(d+e+f)/(a+b+c+d+e+f)] * 100 % berechnet.

16. Polyethermodifiziertes aminofunktionelles Polybutadien (G) bzw. (K) nach mindestens einem der Ansprüche 12 bis 15, **dadurch gekennzeichnet, dass** 0 % bis 80%, bevorzugt 0 % bis 30 %, bevorzugter 0 % bis 10 %, am bevorzugtesten 0 % bis 5 % der enthaltenen Doppelbindungen 1,2-Vinyl-Doppelbindungen sind und 20 % bis 100 %, bevorzugt 70 % bis 100 %, bevorzugter 90 % bis 100 %, am bevorzugtesten 95 % bis 100 % der enthaltenden Doppelbindungen 1,4-Doppelbindungen sind.

17. Polyethermodifiziertes aminofunktionelles Polybutadien (G) bzw. (K) nach einem der Ansprüche 12 bis 16, **dadurch gekennzeichnet, dass**
- die zahlenmittlere Molmasse (Mₙ) des Polybutadienteils von 200 g/mol bis 20000 g/mol, bevorzugt von 500 g/mol bis 10000 g/mol, am bevorzugtesten von 700 g/mol bis 5000 g/mol beträgt; und/oder
- die mittlere Molmasse des Rests B von 30 g/mol bis 20000 g/mol, bevorzugt von 50 g/mol bis 10000 g/mol, bevorzugter von 100 g/mol bis 5000 g/mol, am bevorzugtesten von 150 g/mol bis 1000 g/mol beträgt;
und/oder
- die zahlenmittlere Molmasse (Mₙ) des polyethermodifizierten aminofunktionellen Polybutadiens (G) bzw. (K) bevorzugt von 1000 g/mol bis 50000 g/mol, bevorzugter von 1500 g/mol bis 40000 g/mol, noch bevorzugter von 2000 g/mol bis 30000 g/mol, am bevorzugtesten von 3000 g/mol bis 10000 g/mol beträgt.
